# EUROPEAN PATENT SPECIFICATION

(11) **EP 3 323 652 B1**
(45) Date of publication and mention of the grant of the patent: **06.09.2023**
(21) Application number: 16199182.3
(22) Date of filing: 16.11.2016
(51) Int. Cl.: B60L 50/00

(54) **ELECTRIC VEHICLE**
ELEKTROFAHRZEUG
VÉHICULE ÉLECTRIQUE

(43) Date of publication of application: 23.05.2018
(73) Proprietor: NIO (Anhui) Holding Co., Ltd., Hefei City, Anhui Province (CN)
(72) Inventor: HARTVELT, Ron, Anting, Jiading, Shanghai (CN); WAY, Mark, Anting, Jiading, Shanghai (CN); MARTIN, Arnaud, Anting, Jiading, Shanghai (CN)
(74) Representative: Vossius & Partner Patentanwälte Rechtsanwälte mbB

(56) References cited:
- WO-A1-2012/086223
- WO-A2-2015/110965
- WO-A2-2016/135691
- DE-U1-202013 104 224

## Description

This invention relates to an electric vehicle.

Advances in battery technology and concerns about pollution from the by-products of internal combustion (IC) engines have led to renewed interest in vehicles propelled by electric motors, and recently there has been some research into the optimal design and layout for an electric car. Hereafter, cars propelled by IC engines will be referred to as `IC cars' and cars propelled by electric motors will be referred to as 'electric cars'.

Proposals have been put forward regarding the optimal number and arrangement of electric motors in an electric car. Some proposals have suggested that a single electric motor should be used in a similar manner to an IC engine in a conventional IC car. An example of such an arrangement is described in US patent application publication no. US-A1-2014/0004404 in the name of Nissan Motor Company Limited. Other proposals have suggested that two or more electric motors should be provided, with some proposals suggesting an electric motor should be provided for each wheel of the car. An example of such a proposal is described in European patent application publication no. EP-A1-0544597 in the name of Tokyo R&D Company Limited.

Proposals have also been put forward regarding the optimal arrangement of batteries in an electric car. Some proposals have suggested that batteries should be arranged below the cockpit, primarily under the driver and passenger seats. Examples of such an arrangement are described in US patent application publication no. US-A1-2014/0004404 in the name of Nissan Motor Company Limited, US patent application publication no. US-A1-2016/0141586 in the name of Honda Motor Company Limited. Other proposals have suggested that the batteries should arranged behind the cockpit. An example of such a proposal is described in Japanese patent publication no. JP-H07-117489 in the name of Mazda Motor Corporation. Some proposals have even suggested that the batteries in larger electric vehicles, such as electric vans, should be arranged off the longitudinal centreline of the vehicle. Examples of such proposals are described in US Patent No. 5,121,044 in the name of Goldman and Chinese patent application publication no. CN-A-104802860 in the name of BYD Company Limited.

Further example layouts of EVs are provided in prior art documents WO2012/086223 A1, WO2015/110965 A2, WO2016/135691 A2, and DE202013104224 U1, each of which provides an electric vehicle comprising at least one battery pack and at least one electric motor.

Although there has been some research into the optimal design for an electric car, as mentioned above, there is currently no consensus on the optimal design, and there remains a need for further research and improvement.

Recent advances in technology have also led to a renewed interest in high-performance electric cars, with pioneering racing series such as Formula E demonstrating the suitability of modern electric racing cars for motorsport.

High performance cars, such as racing cars and super cars, are typically designed to achieve high speeds and to be handle stably and effectively in high speed corners. As a result, factors such as mass distribution and aerodynamic shape are major considerations in the design of high performance cars.

The current body of research into the optimal design and layout for an electric car is primarily directed towards non-high performance electric cars. The major design considerations for non-high performance electric cars typically comprise factors such as affordability and driver and passenger comfort and safety. The major design considerations for high-performance electric cars, such as mass distribution and aerodynamic shape, are typically only secondary design considerations in non-high performance electric cars, if they are considerations at all. As a result, the optimal design for a high performance electric car may be significantly different to the optimal design for a non-high performance electric car.

Since the 1920's, high performance cars have been primarily propelled by IC engines, and there exists a large body of research into the optimal design and layout for a high performance IC car. However, there is no equivalent body of research into the optimal design and layout for a high performance electric car or electric supercar.

Although the many of the design considerations for a high performance IC car are the same for a high-performance electric car, the optimal design and layout for a high-performance IC car may be significantly different to the optimal design and layout for a high performance electric car. This is because the design and layout of a high performance IC car is constrained by the requirement for certain essential components that are particular to an IC car, such as the engine and fuel tank, and which are not required in an electric car. Equally, the design and layout of a high performance electric car is constrained by certain essential features that are particular to an electric car, such as the batteries and the main electric drive motors, which are not required in an IC car.

Therefore, there is an opportunity to improve on the design and layout of electric cars, and in particular, to improve on the design and layout of high-performance electric cars.

It would be desirable to provide an improved arrangement for the batteries of an electric car. It would be desirable to provide an improved arrangement for the motors of an electric car. It would be desirable to provide an improved aerodynamic shape for an electric car. It would be desirable to provide an improved design and layout for a high performance electric car. It would be desirable to provide an improved design and layout for a high performance electric car that is configured for speed and handling. It would be desirable to provide an improved design and layout for a high performance electric car that is configured to provide high downforce levels, in particular during high speed cornering.

As used herein, the term "battery electric" is used to describe an electric vehicle that is propelled partially or entirely by electric motors using energy stored in batteries or other such electrochemical energy storage or electrical energy generation device.

As used herein, relative terms referring to relative positions of features of the vehicle, such as `left', 'right', 'front' and 'rear', are defined in the reference frame of a driver that is seated in the cockpit of the vehicle and facing forwards. For example, the 'front left wheel' of the vehicle is the wheel that is arranged forward of the driver and on the driver's left side.

The present invention is defined in the independent claim 1.

The invention provides an improved electric vehicle capable of receiving a first and a second battery pack and securing them to the vehicle in order to be used as the main power source for the vehicle. As the first and second battery packs are positioned adjacent at least a portion of the respective first and second cockpit sidewalls, they are made more accessible than in some known battery electric vehicles in which the battery packs are position beneath the cockpit. This improved configuration may facilitate changeover or replacement and inspection and maintenance of battery packs secured to the vehicle. This arrangement may also help to keep the area beneath the cockpit free and thereby increase the flexibility in the design of the underbody of the vehicle.

Some preferred features of the present invention are set out in the dependent claims to which reference should now be made.

Preferably, the first battery pack is removable laterally from the first side of the vehicle and the second battery pack is removable laterally from the second side of the vehicle. This arrangement may ensure that the battery packs are more accessible than in some known electric vehicles in which the battery packs are positioned beneath the cockpit floor. This may facilitate changeover or replacement and inspection and maintenance of the battery packs. This arrangement may also help to keep an area beneath the cockpit free from battery packs and thereby increase the flexibility in the design of the underbody of the vehicle.

Preferably, the vehicle further comprises: a front electric motor assembly configured to drive the first front wheel and the second front wheel; and a rear electric motor assembly configured to drive the first rear wheel and the second rear wheel. This enables each of the wheels to be driven by a separate motor. This arrangement may help to provide a more even mass distribution, more effective and independent control of the wheels and more effective control of the operation of the vehicle.

Preferably, a front electric motor assembly (30) configured to drive the first front wheel (FL) and the second front wheel (FR) is positioned forward of the cockpit (15);

Preferably, a rear electric motor assembly (40) configured to drive the first rear wheel (RL) and the second rear wheel (RR) and positioned rearward of the cockpit (15).

Preferably, each of the front and rear electric motor assemblies comprises a pair of electric motors, a first one of the electric motors being arranged to drive a first wheel at a first side of the vehicle and a second one of the electric motors being arranged to drive a second wheel at a second side of the vehicle. This arrangement may help to provide a more even mass distribution, more effective and independent control of the wheels and more effective control of the operation of the vehicle.

The motors in each motor assembly may be positioned immediately adjacent, or proximate one another, to minimise the overall size of the assembly. Preferably the motors are positioned back-to-back with their output shafts in substantially opposing directions. This may enable the overall size and mass of the motor assemblies to be minimised. The motors may be encased by or coupled to a casing which may be mountable to a mounting point on the chassis.

An output shaft of the front electric motor assembly may be positioned rearward (or forward) of a transverse centreline of a drive shaft for each of the first and second front wheels and wherein an output shaft of the rear electric motor assembly is positioned forward (or rearward) of a transverse centreline a drive shaft for each of the first and second rear wheels.

Each battery pack may be a single battery pack. Alternatively, each battery pack may comprise two or more battery packs.

Preferably, the first battery pack is coupled only to the front electric motor assembly so as to supply power only to the front electric motor assembly and the second battery pack is coupled only to the rear electric motor assembly so as to supply power only to the rear electric motor assembly. This may enable one set of wheels (i.e. front or rear wheels) to continue to be operated in the event of a failure of the other battery pack or related components. This may enable more controlled operation of the vehicle in the event of a failure in the powertrain.

This may also provide an improved vehicle in which the means for transmitting power from each battery pack to its respective motor assembly which may, for example, be runs of high voltage cable, are kept to a minimum in their number and length. This may help to reduce the mass of the vehicle. This may also reduce the cost of manufacturing and running the vehicle. This arrangement may also remove the need for cables to be passed across the vehicle, perhaps through or beneath the cockpit, to couple the first and second battery packs which may also have required covers or shields. As the battery packs are positioned to the sides of the cockpit as opposed to beneath the cockpit floor as in some known electric vehicles, there may be greater freedom to optimise the shape of an underbody of the vehicle. For example, this may enable the aerodynamic performance of the underbody to be optimised so as to generate additional downforce and improve performance and handling of the vehicle, particularly at high speed. Alternatively or additionally, it may also enable a lower positioning of the occupant(s) of the vehicle in order to lower the centre of mass and improve the handling of the vehicle.

Preferably, the first battery pack extends substantially along a first side of the cockpit and the second battery pack extends substantially along a second side of the cockpit. This arrangement may ensure that the battery packs are more accessible than in known battery electric vehicles in which the battery packs are positioned beneath the cockpit floor. This may facilitate changeover or replacement and inspection and maintenance of the battery packs. This arrangement may also help to keep an area beneath the cockpit free from battery packs and thereby increase the flexibility in the design of the underbody of the vehicle.

The first battery pack is releasably secured to the first battery pack receiving portion between the first front wheel and rear wheels and the second battery pack is releasably secured to the second battery pack receiving portion between the second front wheel and rear wheels. This arrangement may ensure that the available space between the wheels is used to carry larger battery packs comprising a greater number of individual cells than those which can be positioned beneath the cockpit floor of known battery electric vehicles. This in turn may mean that the vehicle can be run for longer periods of time between changeover or replacement of the battery packs.

Preferably, the first battery pack extends substantially between first front and rear wheel housings for the first front and rear wheels and the second battery pack extends substantially between first front and rear wheel housings for the second front and rear wheels. This arrangement may ensure that the available space between the wheels, allowing sufficient clearance for any turning wheels (which may be just the front wheels, just the rear wheels, or all wheels), is used to carry larger battery packs comprising a greater number of individual cells than those which can be positioned beneath the cockpit floor of known battery electric vehicles. This in turn may mean that the vehicle can be run for longer periods of time between changeover or replacement of the battery packs.

Preferably, the first and second battery packs are identical. This may help to minimise the number of battery packs required to enable the vehicle to be operated for longer periods.

Preferably, the first and second battery packs each comprise a connector for coupling the battery packs to the front and rear motor assemblies. This may be a connector of any known type. Preferably it is a high voltage connector. Preferably it is a quick release type of connector to facilitate fast changeover / replacement of the battery packs.

Preferably, the first battery pack is orientated so that its connector is positioned towards a front end of the vehicle, and wherein the second battery pack is orientated so that its connector is positioned towards a rear end of the vehicle. This may help to keep the length of any cables coupling the batteries to the motor assemblies to a minimum, thereby minimising the associated mass and cost.

Preferably, the vehicle further comprises a first battery pack cover releasably securable to the chassis so as to conceal the first battery pack; and a second battery pack cover releasably securable to the chassis so as to conceal the second battery pack.

Preferably, the vehicle further comprises an aerodynamic underbody arrangement. This may be configured to expand air and generate downforce. This may provide more stable effective operation of the vehicle, particular at high speed and during cornering.

Preferably, the underbody arrangement comprises a continuous channel for air to pass beneath the vehicle, the continuous channel for air comprising: an expansion section extending from a front end of the underbody arrangement to a rear end of the underbody arrangement; and a pair of opposing sidewalls defining opposite sides of the central expansion section. This may control the manner in which air flows beneath the vehicle and generate additional downforce.

Preferably, the pair of opposing sidewalls separate the central expansion section from the first and second battery pack receiving portions or the first and second battery packs. This may control the manner in which air flows beneath the vehicle, prevent the battery packs from interrupting the flow of air, and help to shield and protect the battery packs from debris and water passing beneath the vehicle.

Preferably, the sidewalls are configured to restrict the flow of air into and out of the expansion section beneath the first and second battery pack receiving portions or the first and second battery packs. This may ensure that the majority of the air flows beneath the vehicle in a controlled manner in a longitudinal direction so as to generated additional downforce, and prevent air from escaping laterally which may interrupt he air flow and reduce the downforce generated by the underbody arrangement.

Preferably, fences may extend from the sidewalls to reduce the gap beneath the sidewalls and further restrict the flow of air into and out of the expansion section beneath the battery packs. This may help to prevent air from escaping laterally which may interrupt he air flow and reduce the downforce generated by the underbody arrangement

Preferably, the underbody arrangement is configured so that when the vehicle is at rest on a level surface, a height of a rear end of the expansion section from the level surface is greater than a height of a front end of the expansion section from the level surface. This helps to give the vehicle body the general shape of an inverse aerofoil and create additional downforce. This arrangement may be made possible, or facilitated, by positioning of the battery packs to the sides of the cockpit as opposed to beneath the cockpit floor as in some known battery electric vehicles. It may also be facilitated by positioning the motor assemblies in the manner described below in relation to the preferred embodiment of the present invention. Configuring the vehicle so the rear of the expansion section is higher than the front of the expansion section from the surface may increase the degree of expansion of air passing beneath the vehicle and generate additional downforce.

Preferably, the expansion section further comprises: a front portion underlying a portion of the vehicle forward of the cockpit; a central portion underlying the cockpit; a rear portion underlying a portion of the vehicle rearward of the cockpit; configured so that the front, central and rear portions are generally continuously inclined upward from a front end of the vehicle to a rear end of the vehicle. The various sections may be angled relative to one another in such a way as to ensure smooth transition of air flowing beneath the vehicle and to generate the required additional downforce.

Preferably, when the vehicle is at rest on a flat, level surface, an angle of the rear portion of the expansion section is between about 5 degrees and about 10 degrees to the level surface. More preferably, an angle of the rear portion of the expansion section is about 7 or about 8 or about 9 degrees to the flat, level surface.

Preferably, a rear portion of the expansion section comprises a diffuser. Preferably, the diffuser comprises two dividers so as to divide the rear portion of the expansion section into three sub-channels. This may help to enhance the transition between air passing beneath the vehicle and ambient air and minimise flow separation and drag.

Preferably, the underbody arrangement is integral with the chassis.

Preferably, the vehicle further comprises a position adjustable rear wing. This may enable the aerodynamic performance of the rear wing to be varied and controlled so as to control the operating characteristics of the vehicle.

Preferably, the vehicle further comprises a pitch adjustable rear wing. This may enable the aerodynamic performance of the rear wing to be varied and controlled so as to control the operating characteristics of the vehicle.

Preferably, the vehicle further comprises a position adjustable and pitch adjustable rear wing wherein the position and pitch of the wing are adjustable by a common mechanism. This may enable the aerodynamic performance of the rear wing to be varied and controlled so as to control the operating characteristics of the vehicle.

Preferably, the vehicle further comprises a linkage for adjusting the position and pitch of the rear wing. Preferably an actuator is provided and coupled to the linkage so as to move the linkage and thereby vary the position and pitch of the wing. More preferably, a single actuator is provided for operating the linkage. This may help to reduce the mass of the vehicle. It may also help to eliminate the need to monitor and balance the relative position of two independent actuators as have been used in some known vehicles to act on opposite ends of a rear wing.

The use of a linkage may also enable the position and pitch of the rear wing to be adjusted simultaneously. It may also reduce the number of separate components and the complexity of the control systems required to adjust the position and pitch of the rear wing compared to that of some known vehicles in which the position and pitch are controlled independently. It may also provide an integrated drag reduction system (DRS) position of the rear wing enabling rapid reduction of the drag attributable to the rear wing.

Preferably, the actuator is a hydraulic actuator. This may help to ensure that the position and pitch of the wing can be precisely controlled.

Preferably, the actuator is positioned substantially on a longitudinal centreline of the vehicle. This may help to centralise the position of the centre of mass of the vehicle and thereby improve handling of the vehicle.

Preferably, a rear of the vehicle comprises a deflector for deflecting air flowing over the vehicle onto the rear wing. This may increase the downforce acting on the rear of the vehicle. This may improve the performance and handling of the vehicle, particularly during high speed cornering.

Preferably, the actuator is configured to move the linkage so as to extend the wing to a position in which air expanded through the diffuser section is directed onto the wing. This may enable the rear wing to be deployed into the air leaving the diffuser and dramatically increase the downforce acting on the rear of the vehicle. This may improve the performance and handling of the vehicle, particularly during high speed cornering.

Preferably, the underbody arrangement further comprises a front wing proximate a front end of the expansion section. This may help to control the flow of air entering the underbody and generate additional downforce.

Preferably, the front wing is a pitch adjustable. This may enable the aerodynamic performance of the front wing to be varied and controlled so as to control the operating characteristics of the vehicle.

Preferably, the chassis comprises a monocoque defining the cockpit. Preferably, the monocoque is made from a lightweight material. Preferably, the monocoque is made from a composite material. The monocoque may comprise mounting points made of another high strength light weight material for mounting other vehicle components.

A suspension system for a vehicle may comprise a first wheel at a first side of the vehicle, a second wheel at a second side of the vehicle, opposite the first side, and a chassis, the suspension system comprising:
a first hub carrier for the first wheel of the vehicle;
a second hub carrier for the second wheel of the vehicle;
a first rocker configured to be rotatably connected to the chassis of the vehicle;
a second rocker configured to be rotatably connected to the chassis of the vehicle;
a first member rotatably connected at one end to the first hub carrier and configured to be rotatably connected at an opposite end to the first rocker;
a second member rotatably connected at one end to the second hub carrier and rotatably connected at an opposite end to the second rocker;
a first suspension spring rotatably connected at one end to the first rocker and configured to be rotatably connected at an opposite end to the chassis of the vehicle;
a second suspension spring rotatably connected at one end to the second rocker and configured to be rotatably connected at the opposite end to the chassis of the vehicle; and
an actuator rotatably connected at one end to the first rocker and rotatably connected at the opposite end to the second rocker,
wherein the length of the actuator is adjustable and adjustment of the length of the actuator changes the preload of the first and second front suspension springs.

The first and second suspension springs may be configured to be rotatably connected to the chassis at substantially the same position on the chassis.

The rotatable connections may be spherical joints. Spherical joints may enable the rotatable connections to have three degrees of freedom of movement.

The vehicle may comprise first front and rear wheels at a first side of the vehicle, second front and rear wheels at a second side of the vehicle, opposite the first side, a chassis and a front suspension system as described above.

The first suspension spring, the second suspension spring and the actuator may be oriented in substantially the same direction. Preferably, the first suspension spring, the second suspension spring and the actuator are oriented substantially transversely relative the vehicle. In other words, preferably the first suspension spring, the second suspension spring and the actuator are oriented substantially perpendicular to the longitudinal axis of the vehicle.

A rear suspension system for a vehicle may comprise a first wheel at a first side of the vehicle, a second wheel at a second side of the vehicle, opposite the first side, and a chassis, the suspension system comprising:
a first rocker configured to be rotatably connected to the chassis of the vehicle;
a second rocker configured to be rotatably connected to the chassis of the vehicle;
a first hub carrier for the first wheel of the vehicle;
a second hub carrier for the second wheel of the vehicle;
a first member rotatably connected at one end to the first hub carrier and rotatably connected at an opposite end to the first rocker;
a second member rotatably connected at one end to the second hub carrier and rotatably connected at an opposite end to the second rocker;
a first suspension spring rotatably connected at one end to the first rocker and configured to be rotatably connected at an opposite end to the chassis of the vehicle;
a second suspension spring rotatably connected at one end to the second rocker and configured to be rotatably connected at the opposite end to the chassis of the vehicle; and
an actuator configured to be rotatably connected at one end to the chassis of the vehicle and rotatably connected at the opposite end to a linkage, the linkage being rotatably connected to the first rocker and the second rocker,
wherein the length of the actuator is adjustable and adjustment of the length of the actuator changes the preload of the first and second front suspension springs.

The linkage may comprise:
a lever arm rotatably supported on the chassis, wherein the actuator is rotatably connected to the midpoint of the lever arm;
a first transfer member rotatably connected at one end to a first end of the lever arm and rotatably connected at an opposite end to the first rocker; and
a second transfer member rotatably connected at one end to a second end of the lever arm, opposite the first end, and rotatably connected at an opposite end to the second rocker.

The vehicle may comprise first front and rear wheels at a first side of the vehicle, second front and rear wheels at a second side of the vehicle, opposite the first side, a chassis and the rear suspension system described above.

The first suspension spring, the second suspension spring and the actuator may be oriented in substantially the same direction. Preferably, the first suspension spring, the second suspension spring and the actuator are oriented substantially longitudinally relative the vehicle. In other words, preferably the first suspension spring, the second suspension spring and the actuator are oriented substantially parallel to the longitudinal axis of the vehicle.

The vehicle may comprise first front and rear wheels at a first side of the vehicle, second front and rear wheels at a second side of the vehicle, opposite the first side, a chassis, the front suspension system described above and the rear suspension system described above.

The invention is particularly suitable for a high performance battery electric vehicle, or battery electric super car. Such vehicles may be intended primarily for use on a race track or circuit or proving ground but may also be suitable for use on public roads. However, the invention is also suitable for battery electric vehicles intended for the mass market and is not limited to high performance vehicles.

In order that the present invention may be more fully understood, an example or preferred embodiment of the present invention will now be described by way of illustration only with reference to the accompanying drawings, in which:
Figure 1 shows a left side view of an electric vehicle according to a preferred embodiment of the present invention;
Figure 2 shows an underside view of the electric vehicle of Figure 1;
Figure 3 shows a cross-section view of the electric vehicle of Figure 1, taken along the line A-A shown in Figure 2;
Figure 4 shows a cross-section view of the electric vehicle of Figure 1, taken along the line B-B shown in Figure 2, which is the longitudinal centreline of the vehicle;
Figure 5 shows a cross-section view of the electric vehicle of Figure 1, taken along the line C-C shown in Figure 2;
Figure 6 shows a plan cross-section view of the electric vehicle of Figure 1, taken along a plane through the axles of the wheels of the vehicle;
Figure 7 shows a plan perspective view of the arrangement of the battery packs, motor assemblies and motor controllers in the electric vehicle of Figure 1;
Figure 8 shows a perspective view of a battery pack of the electric vehicle of Figure 1;
Figure 9 shows a perspective view of a battery pack cover of the electric vehicle of Figure 1;
Figure 10 shows a cross-section view taken through the left battery pack and left battery pack covers of Figures 8 and 9, at the connector, when the battery pack and battery pack cover are fitted to the chassis of the vehicle of Figure 1;
Figure 11 shows a right side view of the chassis of the electric vehicle of Figure 1;
Figure 12 shows a motor assembly, motor controller and battery pack connector of the electric vehicle of Figure 1;
Figure 13 shows a partially exploded perspective view of the chassis, battery packs and battery pack covers of the electric vehicle of Figure 1;
Figure 14 shows a front view of the electric vehicle of Figure 1;
Figure 15 shows a rear view of the electric vehicle of Figure 1;
Figure 16 shows a perspective view of the adjustable rear wing assembly of the electric vehicle of Figure 1;
Figure 17 shows a right side view of the electric vehicle of Figure 1, with the adjustable rear wing in a fully extended or fully deployed position;
Figure 18 shows a partial cross-section view of the rear wing assembly of Figure 16, taken along the longitudinal centreline of the assembly, with the rear wing in a retracted or stowed position;
Figure 19 shows a partial cross-section view of the rear wing assembly of Figure 16, taken along the longitudinal centreline of the assembly, with the rear wing in a partially extended or partially deployed position;
Figure 20 shows a partial cross-section view of the rear wing assembly of Figure 16, taken along the longitudinal centreline of the assembly, with the rear wing in a fully extended or fully deployed position;
Figure 21 a perspective view of the front suspension assembly of the electric vehicle of Figure 1;
Figure 22 shows a perspective view of the rear suspension assembly of the electric vehicle of Figure 1;
Figure 23 shows a side view of the left hub carrier of the front suspension system of Figure 21; and
Figure 24 shows a side view of the left hub carrier of the rear suspension system of Figure 22.

A vehicle 1 according to a preferred embodiment of the present invention is a high performance battery electric car or a battery electric supercar.

### General configuration of the vehicle

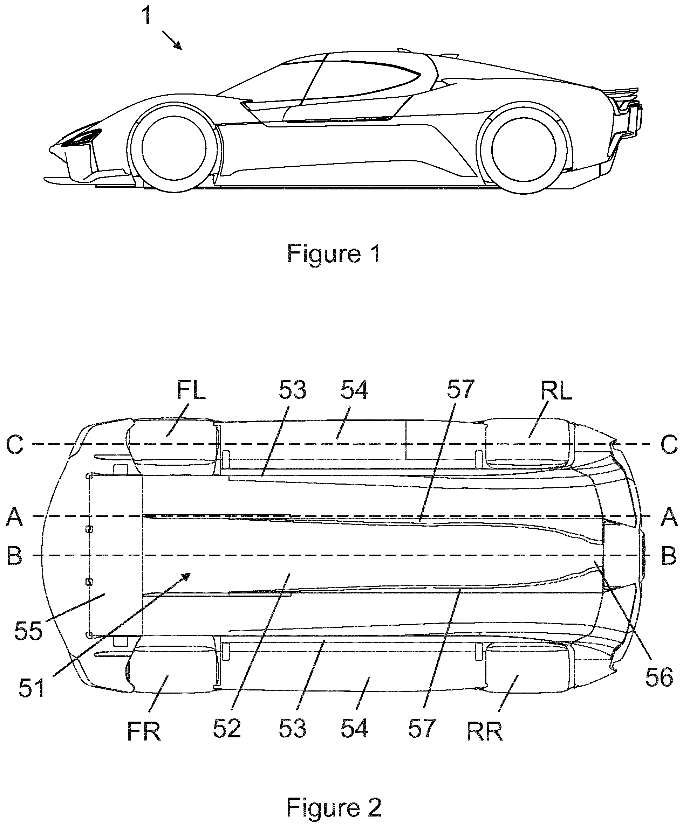

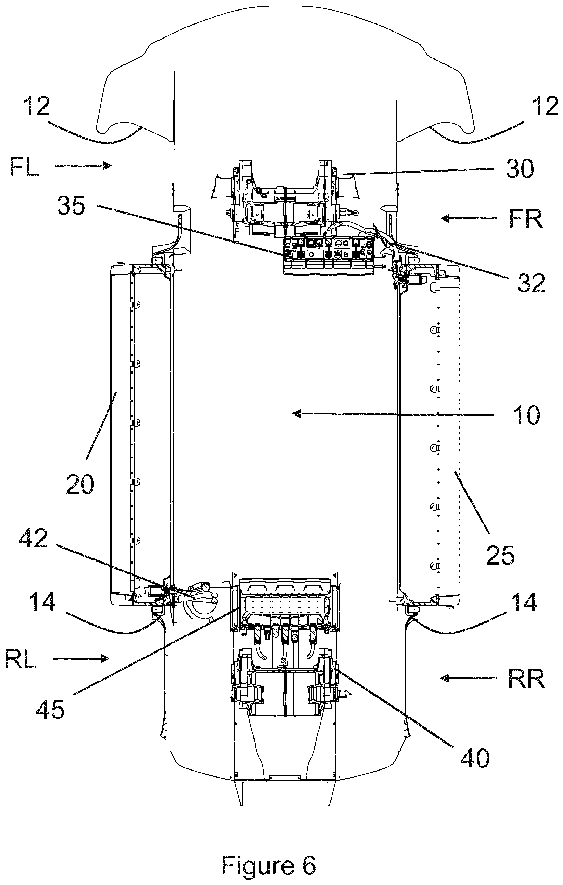

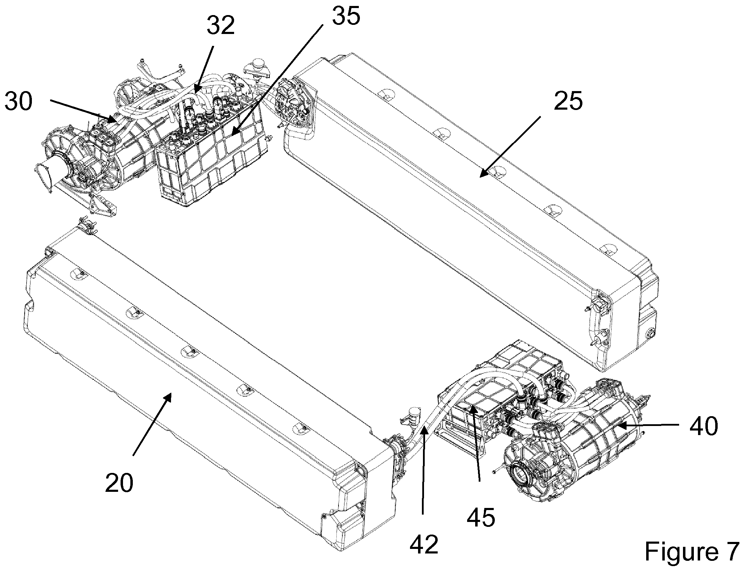

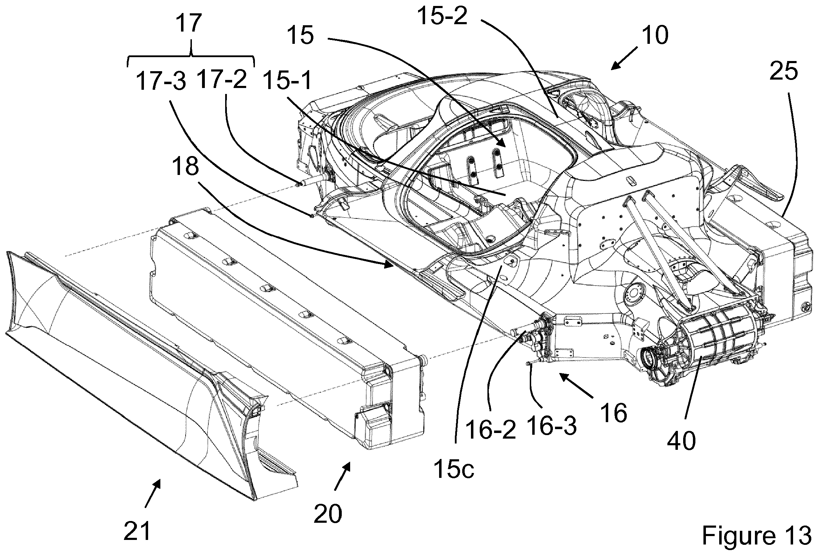

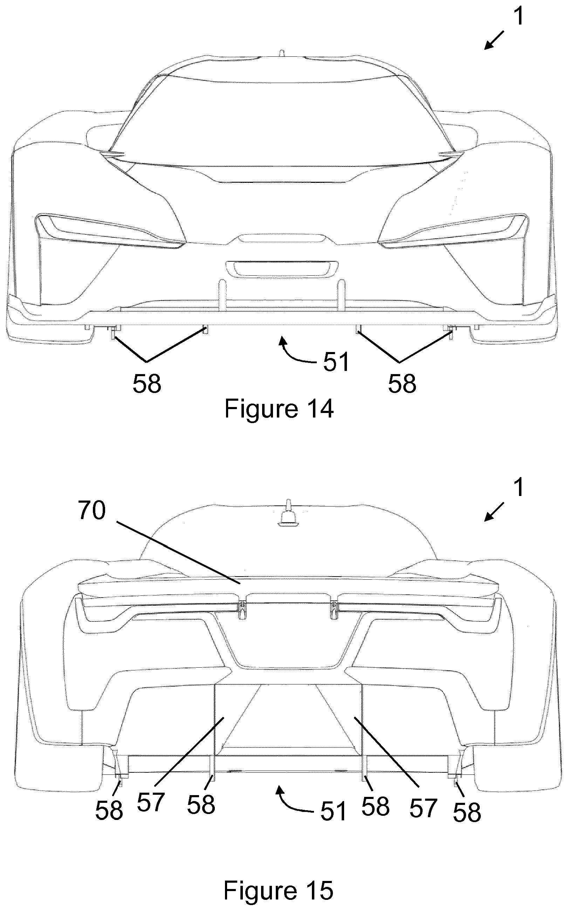

A battery electric vehicle 1 according to the preferred embodiment of the present invention is shown in Figures 1 to 23.

The vehicle generally comprises a cockpit portion 2, a front portion 4 forward of the cockpit portion 2 and a rear portion 6 rearward of the cockpit portion 2.

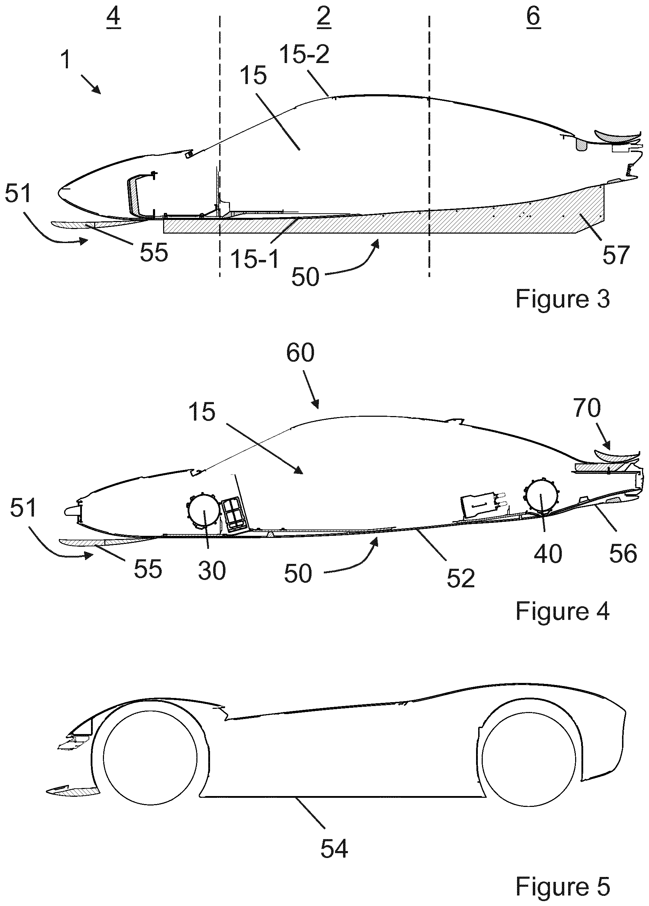

When viewed from the side, as shown in Figures 1, 3, 4, 5, 11 and 17, the vehicle 1 generally has the form of an inverse aerofoil section that is arranged to generate downforce or `negative lift'.. The upper body generally rises from the front end to the rear end of the vehicle. The underbody arrangement also generally rises from the front end to the rear end of the vehicle, particularly in a central region running along the longitudinal centreline. This is particularly apparent from the cross-section views of Figure 4, which is taken through the longitudinal centreline of the vehicle.

The front of the vehicle 1 may be lower than existing vehicles, particularly road cars, and the rear of the vehicle may be higher than existing vehicle, particularly road cars. This is because the vehicle is designed primarily, though not exclusively, for use on a race track, or circuit or proving ground, the vehicle does not require a bulky IC engine and the vehicle has an innovative battery layout, which is discussed in further detail below.

It will be appreciated that although the vehicle 1 is designed primarily for use on a race track, the generally configuration of the vehicle is also suitable for use in mass market battery electric road vehicles.

The electric vehicle 1 generally comprises the following components:-
- a left front wheel FL and a left rear wheel FR;
- a right front wheel FR and a left rear wheel RR;
- a chassis 10 defining a cockpit 15 for occupants of the vehicle 1;
- a left battery pack 20 positioned longitudinally along the left side of the vehicle between the front left wheel FL and the rear left wheel RL;
- a right battery pack 25 positioned longitudinally along the right side of the vehicle between the front right wheel FR and the rear right wheel RR;
- a left battery pack cover (21) for concealing the left battery pack 20;
- a right battery pack cover (26) for concealing the right battery pack 25;
- a front motor assembly 30 positioned forward of the cockpit 15 for driving the front wheels;
- a front motor controller 35 for monitoring and controlling operation of the front motor assembly 30;
- a rear motor assembly 40 positioned rearward of the cockpit 15 for driving the rear wheels;
- a rear motor controller 45 for monitoring and controlling operation of the rear motor assembly 40;
- an underbody arrangement 50 for directing air flowing beneath the vehicle and expanding air and generating downforce;
- an upper body arrangement 60 for directing air flowing over the vehicle 1 and generating downforce;
- an adjustable rear wing 70 for generating additional and variable downforce; and
- a vehicle control unit (VCU) (not shown) for controlling the various subsystems of the vehicle 1.

These components and their arrangement are described in more detail below.

### Chassis

A chassis 10 of the vehicle 1 of the preferred embodiment is a monocoque construction, and does not typically comprise any additional sub frames. The chassis 10 generally comprises a tub made from carbon fibre or another lightweight, high strength, composite material. The chassis 10 comprises a series of mounting points (not shown) for mounting various components to the chassis, as will be described further below. The chassis 10 also generally defines the underbody arrangement 50 and the upper body arrangement 60, as will be described further below.

### Cockpit

The chassis 10 of the vehicle 1 of the preferred embodiment defines a cockpit 15 for encapsulating and protecting any occupants of the vehicle.

The cockpit 15 comprises: a cockpit floor 15-1; a cockpit roof 15-2, a left cockpit side wall 15-3 extending between the cockpit floor 15-1 and the cockpit roof 15-2; and a right cockpit side wall 15-4 extending between the cockpit floor 15-1 and the cockpit roof 15-2;

In the preferred embodiment, the cockpit 15 is configured to accommodate a driver and a passenger. Accordingly, the cockpit 15 comprises a seat for the driver (not shown) and a seat for the passenger (not shown). The seat for the driver and the seat for the passenger are arranged laterally of each other in the cockpit 15, at either side of the longitudinal centreline of the vehicle 1, and the seat for the driver is arranged forwards of the seat for the passenger in the cockpit 15.

It will be appreciated that in other embodiments, the seat for the driver and the seat for the passenger (if required) may be arranged in any other suitable arrangement. For example, the seat for the driver and the seat for the passenger may be arranged substantially on the longitudinal centreline of the vehicle, with the seat for the driver arranged forwards of the seat for the passenger. In another example, the seat for the driver and the seat for the passenger may be arranged at either side of the longitudinal centreline of the vehicle and substantially adjacent to each other. It will also be appreciated that in other embodiments, the cockpit may be configured to accommodate a greater number of occupants, such as a driver and two, three or four passengers, or the cockpit may be configured to accommodate a driver only.

The cockpit is provided with suitable means for the driver and/or passenger to control operation of the vehicle (not shown). For example, the cockpit may be generally provided with a steering wheel, an accelerator pedal and a brake pedal and means for displaying information about the operation of the vehicle. However, it will be appreciated that in some embodiments the vehicle may comprise means for autonomous operation and in these embodiments the cockpit may not comprise means for the driver and/or passenger to control operation of the vehicle.

In some embodiments, the cockpit and its interior may be integrated with the tub. For example, the tub may comprise integrated seats for the driver and / or passenger.

### Positioning of the battery packs

In the vehicle 1 of the preferred embodiment, the battery packs 20, 25 are arranged at either side of the vehicle 1, between the front and rear wheels. In particular, the battery packs 20, 25 are arranged along opposite sides of the cockpit 15. This arrangement provides several advantages over previously proposed arrangements of batteries in electric vehicles, such as beneath the cockpit floor or in front of or behind the cockpit.

Positioning the left and right battery packs 20, 25 (from the perspective of a driver facing forwards in the cockpit) along the left and right sides of the vehicle 1, between the front and rear wheels, provides certain advantages for the aerodynamic performance and mass distribution of the vehicle, which are described in more detail below. Positioning the left and right battery packs 20, 25 along the sides of the vehicle 1, between the front and rear wheels, also facilitates changeover of the battery packs, as described in more detail below. It also facilitates access to the battery packs for inspection, servicing or maintenance.

The chassis 10 comprises a left battery pack receiving portion 18 for receiving the left battery pack 20 and a right battery pack receiving portion 19 for receiving the right battery pack 25. The left battery pack receiving portion 18 is positioned adjacent a lower portion of the left side wall 15-3 of the cockpit 15, between the left front wheel FL and left rear wheel RL. The right battery pack receiving portion 19 is positioned adjacent a lower portion of the right side wall 15-4 of the cockpit 15, between the right front wheel FR and the right rear wheel RR. The left battery pack 20 is removably supportable on the chassis 10 at the left battery pack receiving portion 18 and the right battery pack 25 is removably supportable on the chassis at the right battery pack receiving portion 19.

Each battery packs 20, 25 is suspended from the chassis 10 along one of its long sides, in a cantilever arrangement. The mass of the battery packs 20, 25 may help to removably secure the battery packs 20, 25 to the chassis when the mass of the battery packs 20, 25 is supported on the chassis 10.

The chassis 10 comprises means for removably supporting the left and right battery packs 20, 25 on the chassis. In this preferred embodiment, the means for removably supporting the left and right battery packs 20, 25 on the chassis 10 comprises two pairs of connectors 16, 17, one pair of connectors 16, 17 on each side of the chassis 10. The connectors 16, 17 are not integral parts of the chassis 10, but rather are independent units that are secured to the chassis before the battery packs 20, 25 are installed. In this preferred embodiment, the connectors are bolted to the chassis.

The connectors 16, 17 are arranged such that on each side of the chassis 10, one of the connectors 16,17 supports one of the left and right battery packs 20, 25 at the rear end of the battery pack receiving portion 18, 19 and the other connector 16, 17 supports the other end of the battery pack towards the front end of the battery pack receiving portion 18, 19.

For each pair of connectors 16, 17, a first connector 16 is configured to physically connect one end of a battery pack to the chassis 10 and is further configured to electrically connect the battery pack to a motor assembly.

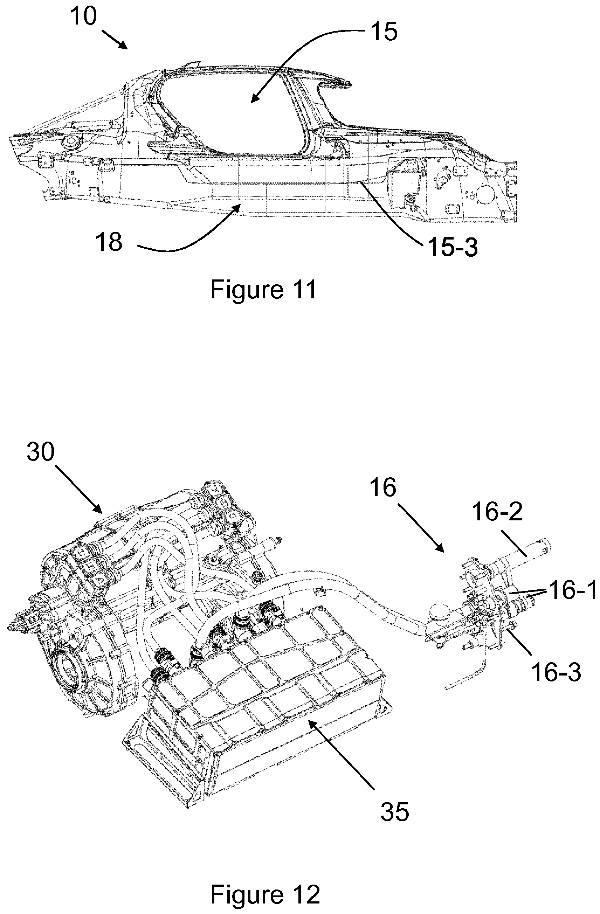

A first connector 16 is shown in Figure 12. The first connector 16 comprises various electrical connectors 16-1 for electrically connecting a battery pack to a motor assembly. The electrical connectors 16-1 correspond to the various electrical connectors 20-1 on the battery packs 20, 25. The first connector 16 also comprises two bosses, an upper boss 16-2 and a lower boss 16-3. The bosses 16-1, 16-2 are configured to be received in channels or sockets in the battery packs 20, 25. The upper boss 16-2 is longer than the lower boss 16-3 and is configured to be received in an upper socket 20-2 of the battery packs, above the electrical connectors 20-1. The lower boss is configured to be received in a lower socket 20-3 of the battery packs 20-25, below the electrical connectors 20-1.

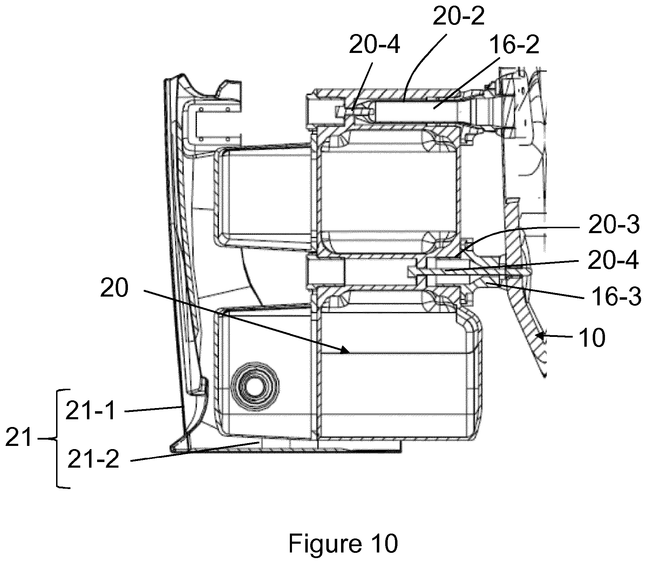

Figure 10 shows a cross-section through a first connector 16, with a left battery pack 20 secured to the first connector 16 and the first connector 16 secured to a chassis 10. The channels or sockets 20-2, 20-3 in the battery pack 20 are through channels that extend through the width of the battery pack. However, a barrier is arranged partially along each of the channels or sockets 20-2, 20-3 to prevent the bosses of the connectors from extending further into the channels or sockets 20-2, 20-3.

As shown in Figure 10, when the upper and lower bosses 16-2 and 16-3 are received in the sockets 20-2, 20-3 of the left battery pack 20, the bosses 16-2, 16-3 abut barriers and are bolted to the barriers using bolts 20-4. The bolts help to physically secure the left battery pack 20 to the first connector 16 and the chassis 10. Preferably, the bosses and bolts are designed to cope with a minimum of between about 20G and 30G, preferably a minimum of about 25G acceleration and declaration.

For each pair of connectors 16, 17, a second connector 17 is configured to physically connect an end of a battery pack to the chassis 10 only. As such, the second connector 17 comprises upper and lower bosses 17-2, 17-3, similar to the first connector, but does not comprise any electrical connectors.

The first and second connectors 16, 17 at the left side of the chassis 10 are arranged at opposite ends to the first and second connectors 16, 17 at the right side of the chassis. In particular, at the left side of the chassis 10 the first connector 16 is arranged at the rear end of the left battery pack receiving portion 18 and at the right side of the chassis 10 the first connector 16 is arranged at the front end of the right battery pack receiving portion 19.

It will be appreciated that in some embodiments, the means for removably supporting the left and right battery packs may not comprise connectors, but rather may comprise features formed integrally with the chassis. In other embodiments, the battery packs and / or chassis may be provided with any other suitable means for mounting the battery packs to the sides of the chassis. For example, the battery packs may be provided with bosses which are engagable with holes in the chassis. Alternatively, the chassis or the battery packs may be fitted with another type of fastener or quick release type fastener.

It will also be appreciated that in some embodiments the battery packs may not be bolted to the chassis, but may be provided with suitable quick release fasteners for releasably securing the battery packs 20, 25 to the bosses.

When the left and right battery packs 20, 25 are removably supported on the chassis 10 at the battery pack receiving portions 18, 19, the battery packs 20, 25 overlap with at least a portion of the cockpit side walls 15-3, 15-4 in a vertical direction. It will therefore be appreciated that the battery packs are not positioned beneath the cockpit floor 15-1 but extend at least partially above the cockpit floor 15-1. In other words, at least a portion of a height of each battery pack is adjacent at least a portion of a height of the cockpit. In particular, an upper portion of each of the battery packs 20, 25 extends above the cockpit floor 15-1, towards the cockpit roof 15-2, in a substantially vertical direction. Also, a lower portion of each of the battery packs 20, 25 extends below the cockpit floor 15-1, towards the road surface, in a substantially vertical direction. The lower portions of the battery packs 20, 25 overlap with side walls of the underbody arrangement 50 of the chassis, as described in more detail below. The side walls of the underbody arrangement 50 of the chassis shield or protect the inboard sides of the lower portions of the battery packs 20, 25.

The left battery pack 20 and the right battery pack 25 are preferably identical. Since the battery packs 20, 25 are identical, and not left or right handed, the battery packs are interchangeable. In other words, the left battery pack 20 may also be used on the right side of the vehicle and vice versa. This reduces the number of specific components that need to be manufactured for the vehicle 1 and reduces the need for labelling of the battery packs. This may also minimise the number of battery packs required during running of the vehicle for extended periods of time as any spent or partially spent battery pack may be replaced by any spare recharged battery back.

Each battery pack has an electrical connector at one end. The left battery pack is orientated with its connector at a rear end. The right battery pack is orientated with its connector at a rear end.

### Battery pack configuration

In the vehicle 1 of the preferred embodiment, each battery pack 20, 25 is a self-supporting, self-contained, unit. Each battery pack 20, 25 comprises a housing or frame incorporating plurality of individual battery cells (not shown). In the preferred embodiment, each battery pack comprises between about 400 and about 500 individual cells. Each cell is between about 400mm and about 450mm long and between about 400mm and about 450mm wide. The cells are insulated inside the battery pack housing.

The inventors have appreciated that there is a balance to be achieved between the size of the battery packs that may be carried by the vehicle and the overall size of the vehicle.

Each battery pack 20, 25 extends over a significant proportion, or substantially all, of the length of the wheel base between the front and rear wheels. However, the inventors have appreciated that there is a need to allow sufficient clearance between the battery packs and at least the front wheels, to allow at least the front wheels to turn unobstructed. As such, each battery pack extends substantially between a rear end of a front wheel housing 12 of the chassis 10 and a front end of a rear wheel housing 14 of the chassis 10. The length of the wheelbase of the vehicle is a factor affecting the maximum permissible length of the battery packs.

In order for the battery packs to cause minimal or disruption to the aerodynamic profile of the vehicle and the flow of air around the vehicle, the battery packs 20, 25 do not extend beyond the outer or inner planes of the wheels, as described further below. An outer face of the left battery pack 20 may be aligned with, or slightly recessed or shallow of, an outer face of the front left wheel FL (or tyre) and the rear left wheel RL (or tyre) and an outer face of the right battery pack 25 may be aligned with, or slightly recessed or shallow of, an outer face of, the front right wheel FR (or tyre) and rear right wheel RR (or tyre). In other words, when viewed from the front of the vehicle 1 or viewed from the rear of the vehicle 1, the left hand battery pack 20 may be hidden by the front left and rear left wheels and the right hand battery pack 25 may be hidden behind the front right and rear right wheels. The width of the vehicle and the width of the wheels are therefore a factor affecting the maximum width of the battery packs 20, 25.

The width of the cockpit is a further factor affecting the permissible overall size of the battery packs. If an inner face or wall of the battery packs projects or encroaches into the space designated for the cockpit, there will be reduced space for the occupant(s) of the cockpit. Generally, this is not desirable and the battery packs will be positioned to the sides of the cockpit. However, it may in some cases be desirable for the inner face or wall of one or both of the battery packs to project or encroach into the cockpit, where for example there is a need for larger battery packs to provide a particular range or period of running or perhaps where the cockpit has a single seat for a driver and the space required for the driver's legs is narrower than the space required for the driver's shoulders.

By positioning the battery packs 20, 25 along the sides of the vehicle 1, and in particular along the sides of the cockpit 15, it is necessary for the driver and passenger to step over the battery packs 20, 25 to enter and leave the cockpit. This is a factor affecting the maximum height of the battery packs. The extent of the battery packs 20, 25 above the cockpit floor 15-1 will ideally be kept to a minimum but will depend on the required capacity and overall dimensions of the battery packs and the width and length of the space available for the battery packs.

In the preferred embodiment of the vehicle, the outside dimensions of each battery pack are about 2000mm long by about 450mm wide by about 450mm high.

As battery technology improves, and the battery packs may be made smaller, it is envisaged that the height of the battery packs may be reduced in preference to a reduction in the length and the width of the battery packs. Such a reduction in height of the battery packs may reduce the height of the step that a driver and passenger are required to make to enter the vehicle.

### Concealing and protecting the battery packs

In the vehicle 1 of the preferred embodiment, a removable battery pack cover or panel is provided at each side of the vehicle 1 for concealing the battery packs 20, 25 during operation of the vehicle 1. A left battery pack cover 21 is removably securable to the left side wall 15-3 of the cockpit 15 and a right battery pack cover 15-6 is removably securable to the right side wall 15-4 of the cockpit 15. The battery pack covers may additionally be securable to the battery packs.

Preferably, each battery pack cover 21, 26 is made from a single piece of carbon fibre or another lightweight, high strength, composite material. Each battery pack cover 21, 26 comprises an elongate, substantially L-shaped piece.

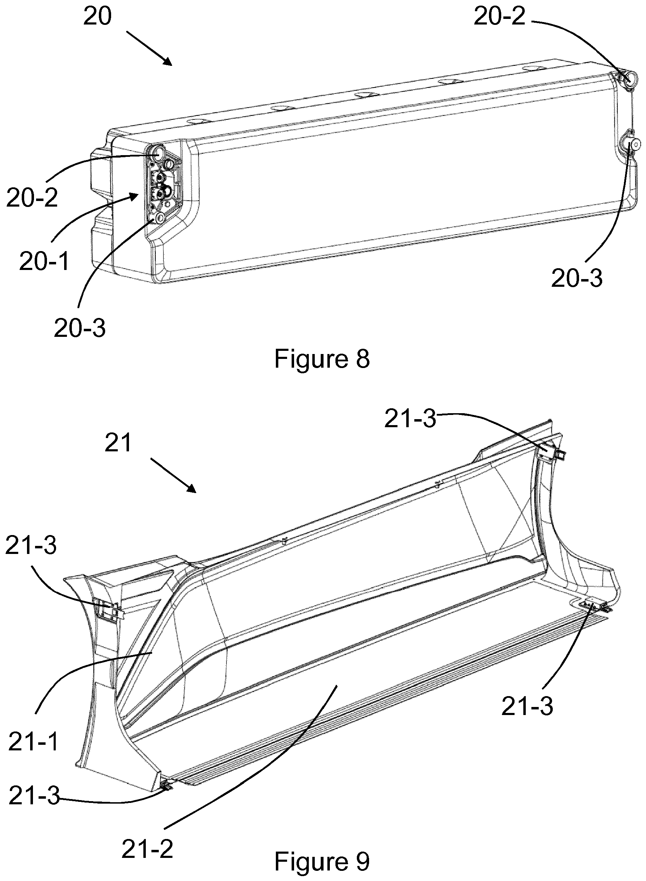

The left battery pack cover 21 is shown in Figure 9, and will be described in more detail. The left battery pack cover 26 comprises an elongate L-shaped piece of carbon fibre. The left battery pack cover 26 has a first part 21-1 that extends substantially in a first direction and a second part 21-2 that extends in a second direction, substantially perpendicular to the first direction. The first part 21-1 and the second part 21-2 are joined at their ends to form the elongate L-shape.

The first part 21-1 of the left battery pack cover 21 is configured to cover the left side of the left battery pack 20 when the left battery pack 20 and the left battery pack cover 21 are removably secured to the chassis 10. The second part 21-1 of the left battery pack cover 21 is configured to cover the underside of the left battery pack 20 when the left battery pack 20 and the left battery pack cover 21 are removably secured to the chassis 10. As such, the first part 21-1 of the left battery pack cover 21 extends generally vertically when the left battery pack cover 21 is removably secured to the chassis 10, to form a part of a side of the vehicle 1, and the second part 21-2 of the left battery pack cover 21 extends generally horizontally when the left battery pack cover 21 is removably secured to the chassis 10, to form at least part of the wings of the underbody arrangement 50, as described in more detail below.

The left battery pack cover 21 is also provided with quick release fasteners 21-3 at the distal corners of the first piece 21-1 and at the distal corners of the second piece 21-2. The quick release fasteners 21-3 are configured to releasably secure the left battery pack cover 21 to the chassis 10.

Any suitable type of quick release fastener may be provided. Preferably, the quick release fasteners are not visible from the outside of the vehicle. In other words, the fasteners are concealed fasteners. This prevents the fasteners from interrupting the air flowing around the vehicle and enhances the visual appeal of the vehicle. The fasteners may be accessible from the rear of the panels, for example from inside the wheel arches.

The right battery pack cover 26 is identical to the left battery pack cover 21, but the features of the right battery pack cover 26 are inverted so that the right battery pack cover may be secured to the chassis 10 at the opposite side.

It will be appreciated that in some embodiments, the battery pack covers may not cover an underside of the batteries. In these embodiments, the battery pack covers may be substantially planar. It will also be appreciated that in such embodiments where the battery pack covers do not cover an underside of the battery packs, the chassis may comprise extensions at either side of the chassis that extend below the battery packs when the battery packs are mounted on the chassis. These extensions may protect the underside of the batteries and may form wing portions of the underbody arrangement 50 of the vehicle. It will further be appreciated that even in embodiments in which the battery pack covers do extend over an underside of the batteries, the chassis may comprise extensions at either side for forming wing portions of the underbody arrangement 50.

The battery pack covers do not provide any support for the mass of the battery packs and are only provided for concealing the battery packs and providing the battery packs with some impact and penetration resistance.

It will be appreciated that in other embodiments the battery pack covers may alternatively be releasably secured only to the battery packs, or to both to the chassis and battery packs.

As the removable battery pack covers 21, 26 are separate components and not integral to the battery packs 20, 25, they are components that are easy and inexpensive to replace if damaged and do not require the entire battery packs to be replaced. The battery pack covers 21, 26 may also be painted the same or a different colour to the rest of the vehicle to which they are to be fitted for styling purposes.

The battery pack covers 21, 26 are removable from the chassis and/or the battery packs 20, 25 to enable changeover of spent or discharged battery packs with new or recharged ones when the vehicle is stationary, for example in the pits between periods of operation of the vehicle 1 on a race track, or during a period of rest for the driver. The process for removing the battery packs 20, 25 from the chassis will be described in more detail below.

Each battery pack may also be provided with additional penetration resistance. A panel of Zylon^{®} material (not shown) may be fitted to the outside of each battery pack to provide this additional penetration resistance. The panel has the same overall length and height as the battery packs 20, 25. The panel is preferably between about 2mm and about 5mm thick, preferably about 3mm think.

It will be appreciated that the panels may be made from another material suitable for penetration resisting material. It will also be appreciated that in some embodiments, the penetration resistant panel may be removably secured to the battery packs so that the panel may be replaced, if damaged, without replacing the battery. It will also be appreciated that in some embodiments the penetration resistant panels may be secured to or integral with the battery pack covers.

### Battery changeover process

Positioning of the battery packs 20, 25 along the sides of the vehicle of the preferred embodiment, between the front and rear wheels, facilitates changeover or replacement of the battery packs. In particular, the position of the battery packs 20, 25 enables spent or discharged battery packs to be removed laterally from the chassis (i.e. in a direction substantially perpendicular to the longitudinal centreline of the vehicle) and new or recharged battery packs may be moved laterally into engagement with the chassis (i.e. in a direction substantially perpendicular to the longitudinal centreline of the vehicle) and secured to the chassis.

A preferred process for removing a spent or discharged battery pack 20, 25 from the chassis 10 of the vehicle 1 may comprise the following steps which need not be completed only in this order:
- removing the front and rear wheels along the side of the vehicle that the battery pack is arranged;
- releasing the concealed fasteners securing the removable battery pack cover to the chassis 10 and removing the battery pack cover from the chassis 10;
- positioning an empty battery trolley (not shown) beneath the battery pack;
- securing the battery pack to the trolley using appropriate fasteners of a known type (at which point the battery pack is secured both to the vehicle and the trolley);
- releasing the fasteners securing the battery pack to the bosses on the chassis 10 so as to release the battery pack from the chassis;
- withdrawing the battery pack from the bosses by moving the trolley laterally away from the chassis; and
- moving the spent or discharged battery into a suitable position for recharging (or maintenance, cooling, repair etc).

The use of a trolley ensures that the battery packs are continually supported during installation and also during release and withdrawal. The trolley may also be used to reposition the battery packs after removal from the chassis, as required. As the sides of the vehicle are low due to the aerodynamic shaping of the underbody arrangement 50, it may be necessary to raise the vehicle first to enable the trolley to be positioned beneath the lower edge of the battery packs.

The removed battery pack may remain supported on and coupled to the trolley during recharging. Each recharged battery pack or spare pre-charged battery packs may be installed on the vehicle by performing the removal process in the reverse manner. Replacing the spent battery packs with replacement fully charged ones may help to reduce downtime between periods of operation.

It will be appreciated that in embodiments where the fasteners that are used to fasten the battery pack covers to the chassis or battery packs are visible, it may not be necessary to remove the wheels in order to remove the battery pack covers and replace the battery packs. It is also envisaged that the removable battery pack covers may be secured only to the battery packs, rather than from the chassis, and so each battery pack and battery pack cover may be removable simultaneously as a subassembly.

### Powertrain layout

In the vehicle of the preferred embodiment, the powertrain generally comprises the left battery pack 20, the right battery pack 25, the front motor assembly 30, the rear motor assembly 40, drive shafts 90 for driving the wheels, the front motor controller 35, the rear motor controller 45 and high voltage cables 32, 42 for coupling the battery packs 20, 25 to the motor controllers 35, 45 and the motors 30, 40.

The front motor assembly 30 is positioned forward of the cockpit 15 and drives the front wheels FL, FR. The front motor assembly 30 comprises a pair of electric motors positioned back-to-back in a common casing, with mounting points for mounting the casing to the chassis 10. The front motor assembly 30 therefore comprises a front left motor for driving the front left wheel FL and a front right motor for driving a front right wheel FR. A front left drive shaft 90 couples the front left motor to the front left wheel FL and a front right drive shaft 90 couples the front right motor to the front right wheel FR. In some embodiments, a differential may optionally be provided between the front left motor and the front right motor, within the common casing, to lock out the motors when needed, thought this is optional.

The rear motor assembly 40 is positioned rearward of the cockpit 15 for driving the rear wheels RL, RR. The rear motor assembly 40 also comprises a pair of electric motors positioned back-to-back in a common casing, with mounting points for mounting it to the chassis. The rear motor assembly 40 therefore comprises a rear left motor for driving the rear left wheel RL and a rear right motor for driving the rear right wheel RR. A rear left drive shaft 90 couples the rear left motor to the rear left wheel RL and a rear right drive shaft 90 couples the rear right motor to the rear right wheel RR. In some embodiments, a differential may optionally be provided between the rear left motor and the rear right motor, within the common casing, to lock out the motors when needed, though this is optional.

The powertrain therefore comprises a separate drive motor for each wheel, the drive motors being pair together in a front motor assembly 30 and a rear motor assembly 40.

In the preferred embodiment, each motor is capable of delivering a maximum power output between about 200kW and 300kW, preferably about 250kW of power, thereby providing a maximum total power output of between about 800kW and 1.2MW, preferably about 1 MW. The motors of the rear motor assembly 40 are capable of delivering higher torque than the motors of the front motor assembly 30. As such, the rear motor assembly 40 is capable of delivering higher torque to the rear wheels than the front motor assembly 30 is capable of delivering to the front wheels.

The front and rear motor assemblies 30, 40 are packaged identically. In other words, the casings are the same shape and size and have the same mounting points for mounting the battery packs to the chassis.

The front and rear motor assemblies 30, 40 are each orientated transversely on the chassis 10. In other words, the motor assemblies 30, 40 are arranged such that the shafts of the motors extend substantially laterally, in a direction substantially perpendicular to the longitudinal centreline of the vehicle. Each motor assembly 30, 40 is positioned on the chassis such that its centre of mass is on, or proximate the longitudinal centreline of the vehicle.

In the preferred embodiment, each motor is provided with a separate drop gear (not shown). This eliminates the need to package a gearbox in the vehicle and reduces the mass and complexity of the vehicle. However, it will be appreciated that there are a range of suitable variable transmissions or continuously variable transmissions that may be employed, if required, in order to achieve certain performance targets. As such, it will be appreciated that each motor may be provided with a drop gear or a variable transmission for driving the wheels, depending on the performance requirements. Since a single drop gear is the preferred arrangement in the preferred embodiment, other types of transmission will not be described in detail.

Each motor assembly 30, 40 is preferably positioned in the vehicle 1 so that its output shafts are either forward or rearward of a drive shaft or axle for driving its respective wheels. For example, positioning each motor assembly so that the output shafts are rearward of its axles may help to shift the centre of mass of the vehicle 1 towards the rear, whereas positioning the front motor assembly so that its output shafts is to the rear of its axle and the rear motor assembly so that its output shaft is forward or its axle, may help to centralise the centre of mass. The forward or rearward offset of each motor assembly 30, 40 is governed by the size of the drop gear (or other transmission) and in the preferred embodiment, the forward / rearward offset is preferably about 250mm.

In the preferred embodiment, the front and rear motor assemblies 30, 40 are mounted to the chassis 10 at slightly different angles to the horizontal (i.e. at slightly different attitudes to one another). This is because the motor assemblies 30, 40 are mounted to the chassis 10 at an angle that is substantially parallel to that of the underbody arrangement 50 at the mounting position on the chassis 10, and the angle of the underbody arrangement 50 to the horizontal (or road surface) changes between the front end of the vehicle and the rear end of the vehicle. As described in more detail below, the underbody arrangement 50 of the vehicle 1 is higher at the rear end of the vehicle than at the front end of the vehicle. However, the angle of the underbody is not constant between the front end and the rear end of the vehicle. As shown in Figures 3 and 4, an angle of the underbody arrangement 50 relative to the horizontal (or the road surface) is relatively shallow at the front end of the vehicle and gradually increases from about the middle of the cockpit 15 to the rear end of the vehicle. Therefore, the front motor assembly 30 is mounted to the chassis 10 at an angle relative to the horizontal (or road surface) that is relatively shallow, because at the mounting position of the front motor assembly 30 the angle of the chassis to the horizontal (or road surface) is relatively shallow. The rear motor assembly 40 is mounted to the chassis 10 at an angle to the horizontal (or road surface) that is steeper compared to the angle of the front motor assembly 30, because at the mounting position of the rear motor assembly 40 the angle of the chassis to the horizontal (or road surface) is relatively large or steep. Mounting the motor assemblies at an angle to the vertical may help to lower the centre of mass of the vehicle.

The left and right battery packs 20, 25 (from the perspective of a driver facing forwards in the cockpit) are independent. In other words, the left and right battery packs 20, 25 are not connected to each other. This advantageously avoids the need for heavy and expensive high voltage cables to be run across the vehicle, either through or around the cockpit, to couple the left and right battery packs 20, 25 together. Instead, the left battery pack 20 is coupled to the rear motor assembly 40 for powering the rear motor assembly 40 only and the right battery pack 25 is coupled to the front motor assembly 30 for powering the front motor assembly 30 only. This arrangement advantageously ensures that if one battery pack fails during operation of the vehicle, and the other remains operational, power will still be transmissible to either both of the front wheels or both of the rear wheels, enabling the vehicle to continue to operate in a controlled manner. This is preferable to an alternative arrangement in which power is transmissible only to both of the left front and rear wheels or to both of the right front and rear wheels, which may not enable such controlled operation of the vehicle.

The left battery pack 20 is coupled to the rear motor assembly 40 via a rear inverter (not shown) for converting the DC voltage supplied from the left battery pack 20 to an AC voltage for supply to the rear motors. The rear inverter is controlled by the rear motor controller 45, which controls the power supplied to each of the motors of the rear motor assembly 40. The rear motor controller 45 is positioned rearward of the cockpit, proximate to the rear motor assembly 40 and forwards of the rear motor assembly 40. The rear motor controller 45 is positioned rearwards of the cockpit 15, proximate and forwards of the rear motor assembly 40 and substantially on or proximate to the longitudinal centreline of the vehicle.

The left battery pack 20 is oriented such that the connector of the left battery pack 20 is arranged towards the rear end of the vehicle 1, and the connector of the left battery pack 20 is connected to the rear inverter by a first set of high voltage cables 42. The arrangement of the left battery pack 20, with its connector positioned towards the rear end of the vehicle, enables the length of the high voltage cables 42 to be relatively short. This reduces the mass of cables required to operate the vehicle.

Similarly, the right battery pack 25 is coupled to the front motor assembly 30 via a front inverter (not shown) for converting the DC voltage supplied from the right battery pack 25 to an AC voltage for supply to the front motors. The front inverter is controlled by the front motor controller 35, which controls the power supplied to each of the motors of the front motor assembly30. The front motor controller 35 is also slightly offset from the longitudinal centreline of the vehicle, towards the right side. This enables the seat for the driver to be arranged further forwards in the cockpit 15 than if the front controller 35 were arranged on the longitudinal centreline of the vehicle 1. However, this arrangement of the front motor controller 35 may also require the seat for the passenger to be slightly offset (i.e. slightly rearwards) of the seat for the driver, to accommodate the front motor controller 35. It will be appreciated that a different positioning of the front motor controller may enable the driver and passenger seat to be aligned.

The right battery pack 25 is oriented such that the connector of the right battery pack 25 is arranged towards the front end of the vehicle 1. The connector of the right battery pack 25 is connected to the front motor assembly 30 by a second set of high voltage cables 32. The arrangement of the right battery pack 25 with its connector positioned towards the front end of the vehicle enables the length of the high voltage cables 32 to be short, and helps to reduce the mass of cables required to operate the vehicle.

In an alternative embodiment of the invention, the left battery pack 20 may be coupled to the front motor assembly 30 and the right battery pack 25 may be coupled to the rear motor assembly 40.

### Aerodynamic underbody arrangement

The vehicle 1 of the preferred embodiment, comprises an aerodynamically designed underbody arrangement 50 for enhancing the aerodynamic performance of the vehicle 1. The underbody arrangement 50 generally comprises an upper wall portion 52, a pair of downwardly extending side wall portions 53 and laterally extending wing portions 54. The aerodynamic underbody arrangement 50 generally comprises a continuous channel 51 between the front end and the rear end of the vehicle 1, to enable air to pass beneath the vehicle 1. The continuous channel 51 generally comprises an expansion section extending from the front end of the vehicle 1 to the rear end of the vehicle 1. The expansion section comprises the upper wall portion 52 and the pair of downwardly extending side wall portions 53.

The upper wall portion 52 and downwardly extending side wall portions 53 define the continuous channel 51 extending substantially along the longitudinal centreline of the vehicle 1. The channel 51 enables a high volume flow rate of air to pass beneath the vehicle 1. The channel 51 has a generally rectangular section, the dimensions of which may vary along its length due to variation in the incline of the portions of the underbody arrangement 50.

The underbody arrangement 50 has a front end or 'nose' at the front end of the vehicle 1, and a rear end or 'tail' at the rear end of the vehicle 1. The continuous channel 51 extends from the front end to the rear end of the underbody arrangement 50, the channel itself also having a front end and a rear end. The upper wall portion 52 at the front end of the channel 51 may, for example, have a height of between about 150mm and about 250mm, preferably about 200mm from the ground, when the vehicle is stationary. The upper wall portion 52 at the rear end of the channel 51 may, for example, have a height of between about 350mm and about 450mm, preferably about 400mm from the ground, when the vehicle is stationary.

The upper wall portion 52 defines the upper boundary of the channel 51. The upper wall portion 52 forms a floor of the front portion 4 of the vehicle 1, a floor of the cockpit portion 2 of the vehicle 1 (i.e. the floor 15-1 of the cockpit 15) and a floor of the rear portion 6 of the vehicle 1.

In the front portion 4 of the vehicle 1, the upper wall portion 52 of the underbody arrangement 50 generally slopes upwards from the front end or 'nose' section towards the cockpit section 2. In other words, when the vehicle 1 is stationary on a level surface, the height of the upper wall portion 52 generally increases from the front end or 'nose' of the vehicle towards the cockpit portion 2.

In the cockpit portion 2 of the vehicle 1, the upper wall portion 52 of the underbody arrangement 50 is either substantially parallel to the level surface or continues to slope generally slopes upwards towards a rear portion 6 of the vehicle 1.

In the rear portion 6 of the vehicle 1, the upper wall portion 52 continues to slope generally upwards towards the rear end or 'tail' of the vehicle 1. The slope of the upper wall portion may be greater in the rear portion of the vehicle than in the front portion of the vehicle. When the vehicle is stationary on a level surface, preferably the upper wall portion 52 is inclined by between about 5 degrees and about 10 degrees, more preferably, between about 6 degrees and about 9 degrees, more preferably about 7 degrees or about 8 degrees to the level surface.

The side wall portions 53 of the underbody arrangement 50 extend at least the length of the cockpit portion 2 of the vehicle 1. The side wall portions 53 of the underbody arrangement 50 substantially define sides of the continuous channel 51 and restrict or inhibit air from entering the channel 51 from the sides of the vehicle 1. The side wall portions 53 extend from the upper wall portion 52 at least to the base of the battery packs 20, 25, when the battery packs 20, 25 are removably supported on the chassis 10. This enables the side wall portions 53 to protect the inboard side of the lower portions of the battery packs 20, 25 from the air and debris flowing through the channel 51, when the vehicle 1 is moving.

Thin, downwardly extending fences 58 may be attached to the side walls 53 of the underbody arrangement 50. The fences 58 may also extend along the inboard sides of the wheels. When the vehicle 1 is stationary on a level surface, the fences 58 may extend down to a height of between about 10mm and about 30mm, preferably about 20mm from the road surface. The fences 58 effectively lower the height of the sidewalls 53 from the road surface, which further helps to restrict or inhibit air from leaving or entering the continuous channel 51 laterally, via the sides of the vehicle 1.

Wing portions 54 of the underbody arrangement 50 generally extend laterally outwards from a lower end of the side walls 53, to underlie the battery packs 20, 25. In the preferred embodiment, the wing portions 54 are comprised of the second parts or lower portions of the L-shaped battery pack covers 21, 26, as described above. It will be appreciated that in other embodiments, the wing portions 54 may be integral with the chassis 10, rather than the battery pack covers 21, 26. The wing portions 54 of the underbody arrangement 50 generally help to shield and protect the underside of the battery packs 20, 25.

When the vehicle 1 is stationary on a level surface, the wing portions 54 may, for example, have a height above the road surface of between about 40mm and about 60mm, preferably about 50mm. This helps to restrict or inhibit the volume of air that may enter or leave the underbody arrangement from the sides, beneath the battery packs 20, 25, thereby enhancing the aerodynamic performance of the underbody arrangement.

As described in more detail below, a front end of the channel 51 at the front portion 4 of the vehicle 1 is provided with a pitch adjustable front wing 55 to divide air entering the channel 51. In particular, the front wing 55 divides the aperture into an upper portion for channelling air over the wing 55 into the underbody arrangement 50, primarily towards the channel, and a lower portion for channelling air under the front wing 55 into the underbody arrangement 50. The front wing generates additional downforce. The pitch of the front wing 55 is adjustable to vary the amount of downforce and drag generated by the wing. In the preferred embodiment, the pitch of the front wing 55 is adjustable manually with a suitable tool when the vehicle is stationary. However, the skilled person will appreciate that it is also possible to vary the pitch of the front wing electronically, for example by providing a suitable on board motor. Preferably, the pitch is adjustable in discrete or predefined increments of, for example, about 0.5 degrees or about 1 degree or about 1.5 degrees or about 2 degrees. However, it will be appreciated that other incremental adjustments or continuous or non-defined adjustment of the front wing may also possible.

A rear section of the channel 51 at the rear portion 6 of the vehicle 1 comprises a diffuser section 56. This comprises two partitions 57 extending downward from the upper wall 52 defining the rear end of the channel 51. The partitions 57 extend rearward from, or proximate, the front of the cockpit portion 2 to, or proximate, the rear end of the channel 51. This defines the channel 51 into the three chambers or channels for air which help to reduce separation of the air passing through the channel 51 from the surfaces of the underbody arrangement 50 and increases the effectiveness of the expansion of air leaving the diffuser section, thereby generating additional downforce. The partitions 57 are preferably substantially planar and narrow at the front end of the cockpit portion 2 and broaden at the base, proximate to the upper wall 52, into pointed or V-shaped partitions towards the rear end of the underbody arrangement 50.

Thin, downwardly extending, fences 58 may also be attached to the outside of the partitions 57, to further reduce separation of air flowing through the channel from the surfaces of the underbody arrangement 50.

### Upper body profile

In the vehicle 1 of the preferred embodiment, the upper body arrangement 60 of the as shown in the Figures is designed to achieve a balance between its styling and aerodynamic functions.

A lip or deflector (not shown) at the rear end of the upper body arrangement 60 deflects air flowing over the upper body arrangement 60 up and onto a rear wing 70 (described below), when the rear wing 70 is deployed from its fully stowed position to an extended position, as described in more detail below.

### Rear wing

The vehicle 1 of the preferred embodiment comprises an adjustable rear wing 70 for controlling and varying the drag of the wing and the additional downforce generated at the rear of the vehicle. The rear wing 70, or "spoiler", has the general shape of an inverse aerofoil and is arranged so as to generate downforce or 'negative lift'. The positon and pitch of the wing are adjustable using a common rear wing adjustment mechanism as described below.

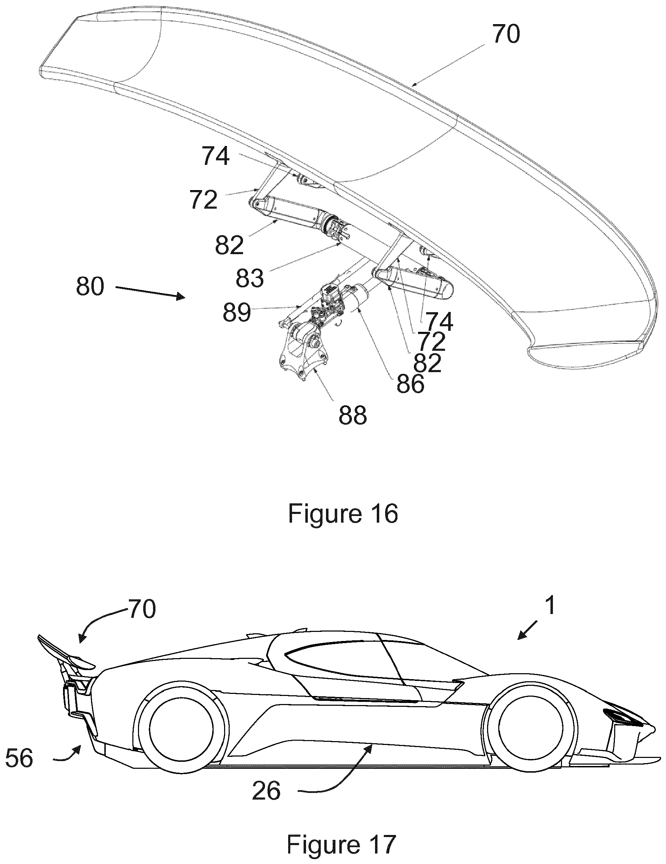

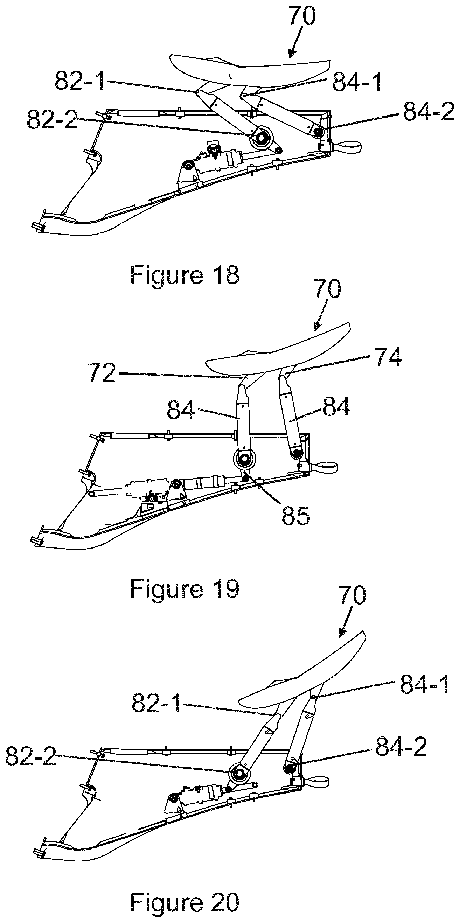

As shown in Figures 16 to 20, the rear wing 70 comprises a front mount 72 and a rear mount 74 which are fixed to its underside and by which the rear wing 70 is connected to the vehicle via a rear wing adjustment mechanism 80. In this example, the front mount 72 comprises a pair of front mounts 72 with one front mount 72 positioned on either side of the longitudinal centre line of the vehicle 1. This is the same with the rear mount 74. In other examples, the front mount 72, or the rear mount 74 or both, may comprise a single, centrally positioned front strut. The position of the rear wing 70 is adjustable using the rear wing adjustment mechanism 80 from a fully retracted or 'stowed' position (shown in Figures 1, 16 and 18) to a fully extended or `deployed' position (shown in Figure 17 and 20). The rear wing 70 is also extendable using the rear wing adjustment mechanism 80 to one or a number of intermediate positions between the fully retracted and fully extended positions.

The positon and pitch of the rear wing 70 is adjustable using the rear wing adjustment mechanism 80 to control the amount of drag or air resistance generated by the rear wing 70 when the vehicle is in operation. The rear wing 70 has at least one intermediate position between its fully retracted and fully extended positions, which is referred to as the `Drag Reduction System' (DRS) position (as shown in Figure 19), that may be used to reduce the drag of the rear wing relative to the fully extended position, to facilitate overtaking manoeuvres, particularly at high speed, and to increase efficiency on straight portions of a circuit or track or road.

As the rear wing 70 is deployed, it is generally moved to the rear of the vehicle 1 and moved upward into the air flow, as described further below. When extended, the rear wing 70 forms an extension of the aerodynamic profile of the upper body arrangement 60. In the fully deployed position, the rear wing 70 also interacts with the air exiting the diffuser 56 and forms an extension of the aerodynamic profile of the underbody arrangement 50. This may increase, or dramatically increase, the downforce generated by the rear wing. This differs from some known vehicles in which the rear wing is deployed into clean air above the vehicle and does not form an extension of the aerodynamic surface over which air is channelled as the vehicle is moving.

During deployment of the wing, the rearward movement of the rear wing 70 is substantial, so that, in the fully deployed positon, a lower surface of the rear wing 70 interacts with air leaving the diffuser 56 and an upper surface of the rear wing 70 interacts with air deflected over the lip of the upper body arrangement 60 at the rear end. During deployment of the wing, the pitch of the wing is also adjusted, the pitch increasing as the wing moves to its fully deployed position.

In a preferred configuration, a width of the rear wing is between about 300mm and about 500mm, preferably between about 350mm and about 450mm, preferably about 400mm from a leading edge to a trailing edge. When the vehicle 1 is viewed from above and the rear wing is fully retracted, there is a substantial overlap in the longitudinal direction between the rear wing 70 and the deflecting lip. In other words, when fully stowed, the wing sits substantially above a rear portion 6 of the vehicle 1. When the vehicle 1 is viewed from above and the rear wing 70 is fully deployed or extended, an overlap of the rear wing 70 with the deflecting lip is small - between about 5mm and about 50mm, preferably between about 10mm and about 30mm, preferably between about 10mm and about 20mm. It will therefore be appreciated that as the rear wing 70 is adjusted from the fully stowed to the fully deployed position, it also moves rearward by nearly as much as the depth of the wing in the longitudinal direction when in the stowed position. It will therefore be appreciated that when the rear wing 70 is deployed, it forms an extension of the aerodynamic surface and has a significant effect on the downforce produced by the upper body of the vehicle.

The rear wing adjustment mechanism 80 comprises front pivot arms 82 each connected at their upper ends to the front mounts 72 of the rear wing 70 by a first articulation 82-1. The first articulation 82-1 allows relative pivoting between the front mounts 72 and the front pivot arms 82 about an axis which is in a transverse direction relative to the vehicle. The lower ends of the front pivot arms 82 are connected to a pivot link axle 83 which extends in a transverse direction between the front pivot arms 82 and is pivotable relative to the vehicle about its longitudinal axis. The front pivot arms 82 pivot with the pivot link axle 83 so that the front pivot arms 82 may pivot relative to the vehicle about the longitudinal axis of the pivot link axle 83 at a second articulation 82-2 at their lower ends.

The rear wing adjustment mechanism 80 also comprises rear pivot arms 84 each connected at their upper ends to the rear mounts 74 of the rear wing 70 by a third articulation 84-1. The third articulation 84-1 allows relative pivoting between the rear mounts 74 and the rear pivot arms 84 about an axis which is in a transverse direction relative to the vehicle. The lower ends of the rear pivot arms 84 are pivotally mounted to the vehicle at a fourth articulation 84-2 which allows the rear arms 84 to be pivoted relative to the vehicle about an axis which is in a transverse direction relative to the vehicle.

On the basis of the chosen positions of the articulations 82-1, 82-2, 84-1 and 84-2, pivoting of the front and rear pivot arms 82, 84 allows the position and orientation of the rear wing 70 to be adjusted as desired.

The rear wing adjustment mechanism 80 further comprises a hydraulic actuator 86 for driving the adjustment mechanism 80. The hydraulic actuator 86 extends parallel to the longitudinal axis of the vehicle and connected at one of its ends to a crank 85 on the underside of the pivot link axle 83. The other end of the hydraulic actuator 86 is pivotally mounted to the vehicle by a pivot mount 88 to allow the hydraulic actuator 86 to pivot relative to the vehicle about an axis which is in a transverse direction relative to the vehicle when the rear wing adjustment mechanism 80 is operated. In this example, the hydraulic actuator is positioned centrally, although it other examples it may be offset from the longitudinal axis of the vehicle 1. The hydraulic actuator 86 is provided with hydraulic pressure by the hydraulic system, as discussed below. A tie rod 89 is also pivotally mounted to the actuator mount 88 and to the crank 85. The tie rod 89 may be provide as part of a linear positon sensor (not shown) to monitor the position of the hydraulic actuator 86 and the linkage.

To extend the rear wing 70 from the stowed position shown in Figure 18, the hydraulic cylinder 86 is retracted from its extended position to pull the crank 87 in a frontwards direction and thereby rotate the front pivot arms 82 rearwards about the first front articulation 82-1. This rearward rotation of the front pivot arms 82 pushes the rear wing 70 upwards and rearwards which in turn rotates the rear pivot arms 84 rearwards about the first rear articulation 84-1. Further retraction of the hydraulic actuator 86 causes further upward and rearward movement of the rear wing 70 until the rear wing 70 is in the fully deployed position shown in Figure 20. It will be understood, that the rear wing 70 may be held in the fully stowed or fully deployed positions and any intermediate position in between, as desired, according to the degree to which the hydraulic actuator 86 is retracted or extended. By using a single hydraulic actuator to adjust the position and orientation of the rear wing 70, it is possible to maintain the correct orientation of the rear wing 70 without the need for careful balancing of the adjustment mechanism as might be the case in adjustment mechanisms using a plurality of actuators. It may also result in an overall reduction in mass.

### Hydraulic system

The vehicle 1 of the preferred embodiment comprises a hydraulic system for providing hydraulic pressure to the hydraulic actuator 86, thus controlling the position adjustment of the rear wing 70.
The hydraulic system generally comprises: at least one hydraulic actuator 86 coupled directly or indirectly to the rear wing 70 and positioned on or proximate, and oriented along, the longitudinal centreline of the chassis 10; a mechanically driven pump (not shown) for generating hydraulic pressure to drive the hydraulic actuator 86 when the drive motors are operating to drive the vehicle; and a small 12 volt electric pump driven by the battery packs for charging the hydraulic system when the vehicle is stationary. Preferably, an independent power assisted steering (PAS) pump in the form of an electro-hydraulic pump is provided and powered by at least one of the battery packs. This enables the power steering to operate when the vehicle is stationary or running at slow speeds.

The electric pump may be used to vary the position of the rear wing 70 when the vehicle is stationary and the wheel motors are not running. This may provide additional access to the rear wing 70 and the upper body arrangement 60 at the rear portion 6 of the vehicle 1 for maintenance and servicing of the vehicle 1.

The hydraulic system also comprises a pressure release valve (not shown) for regulating the maximum hydraulic pressure of the system and for depressurising the system when the vehicle 1 is stationary for safety and to facilitate maintenance and servicing.

### Integrated management system

The vehicle 1 of the preferred embodiment comprises a vehicle control unit (VCU) for controlling various vehicle systems.

The VCU receives inputs from various sensors, actuators and other controllers of the vehicle, and distributes control signals to the other controllers and to other components of the vehicle in order to control their operation. Data is passed to the VCU from a variety of sensors, including temperature, sensors, pressure sensors, speed sensors and position sensors positioned around the vehicle 1. Data is also passed to the VCU from inputs directly controlled by the driver, such as from an accelerator, brake and steering wheel. The VCU uses these inputs to determine the performance of the vehicle 1 and to make adjustments where required. The VCU is connected to the front and rear motor controllers 35, 45. The VCU is configured to send control signals, including torque control signals to the front and rear motor controllers 35, 45 for controlling the electric motors of the front and rear motor assemblies 30, 40. The VCU uses various inputs to determine how much torque should be delivered to the each of the wheels of the vehicle 1, and sends appropriate control signals to front and rear motor controllers 35, 45.

The VCU also receives state of charge information from each of the left and right battery packs 20, 25. The state of charge is generally derived from measurements of the output voltage from each of the battery packs 20, 25.

As suitable vehicle control units are known, the VCU will not be further described here.

### Wheels

The vehicle 1 of the preferred embodiment comprises 482mm (19 inch) diameter, high-strength, lightweight wheels. The wheels may for example be forged alloy wheels. A rear or inside surface of the spokes may be hollowed to reduce the mass of the wheels and thereby the mass of the vehicle.

### Tyres

As discussed above, the downforce generated by the underbody arrangement 50, the upper body arrangement 60 and the rear wing 70 is substantial, particularly when the vehicle 1 is operating at maximum operating performance (i.e. at high speeds). As such, the load on the tyres, particularly the rear tyres, at maximum operating performance of the vehicle is greater than the maximum load of most, if not all, road tyres.

The vehicle 1 of the preferred embodiment comprises higher profile tyres than those that are typically used on high performance vehicles, such higher profile tyres being capable of withstanding greater vertical loads and providing increased volume to accommodate tyre squish at high speeds and downforce loads. The width of the tyres will be appropriate for the width of the wheels used. The construction and materials used for the tyres will be appropriate for the performance requirements of the vehicle.

### Suspension system

The vehicle 1 comprises an adjustable front suspension system 100 and an adjustable rear suspension system 110.

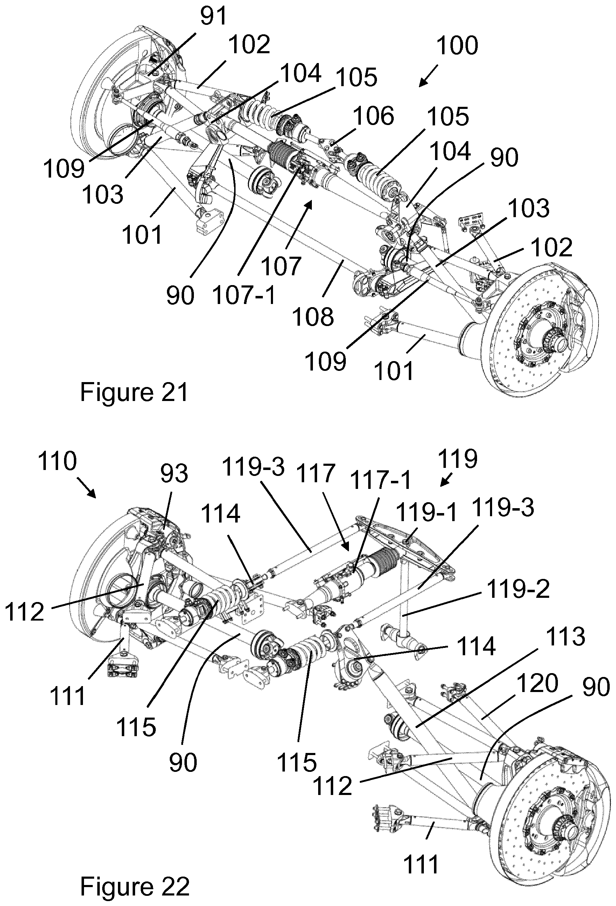

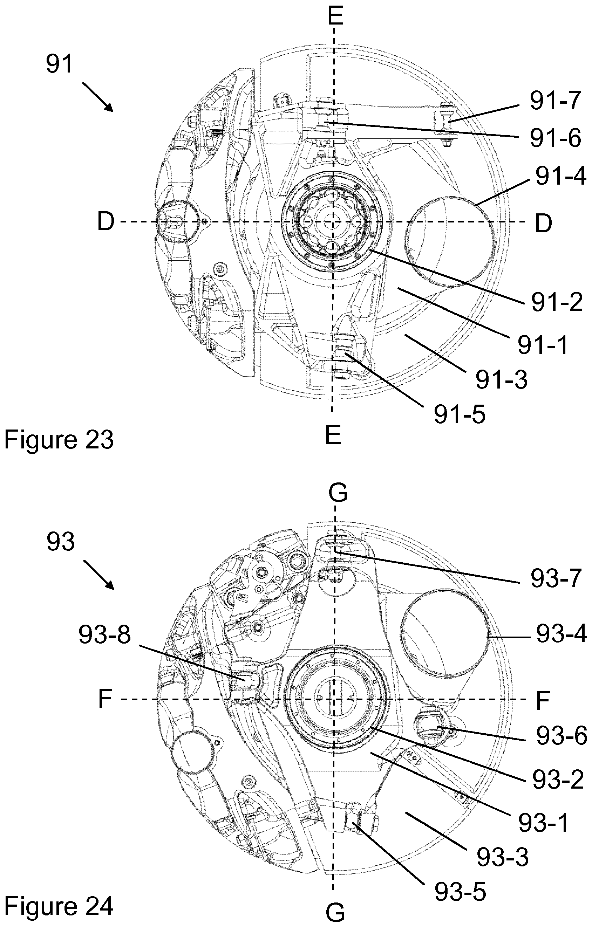

The adjustable front suspension system 100 is shown in Figures 21 and 23. The adjustable front suspension system 100 generally comprises a double wishbone arrangement, a pushrod arrangement, an anti-roll bar and torsion bars.

Each of the front right and front left wheels comprises a front hub carrier or knuckle 91, as shown in Figure 23. The hub carrier 91 is arranged adjacent to a wheel hub (not shown) and the drive shaft 90 rotatably extends through a central aperture in the hub carrier 91 and is secured to the wheel hub.

Each front hub carrier 91 comprises a main body 91-1 having a central aperture 91-2 through which the drive shaft 90 rotatable extends, and a substantially circular cowling 91-3 that is supported on the main body 91-1 and surrounds a brake disc (not shown). In this embodiment, the cowling 91-3 does not form a full circular cover around the entire circumference of the brake disc, but rather has a cut-out portion for accommodating brake pads (not shown) that is positioned towards the rear end of the vehicle 1 when the hub carrier 91 is mounted to the vehicle. A vent 91-4 is provided in the cowling 91-3 to provide cooling for the brake disc. The vent 91-4 is arranged substantially on the horizontal centreline D-D of the hub carrier 91 and is positioned such that the vent 91-4 is towards the front end of the vehicle 1 when the hub carrier 91 is fitted to the vehicle.

Each front hub carrier 91 also comprises three mounting points 91-5, 91-6, 91-7. A first mounting point 91-5 is arranged directly below the central aperture 91-2, substantially on the vertical centreline E-E of the hub carrier 91, and is positioned towards the outer edge of the circle defined by the cowling 91-3. A second mounting point 91-6 is arranged directly above the central aperture 91-3, substantially on the vertical centreline E-E of the hub carrier 91, and is positioned at about the midpoint between the central aperture 91-2 and the outer edge of the circle defined by the cowling 91-3. A third mounting point 91-7 is arranged substantially directly above the vent 91-4 in the cowling 91-3, such that the third mounting point 91-7 is positioned towards the front end of the vehicle 1 when the hub carrier 91 is fitted to the vehicle, and is positioned substantially laterally to the second aperture 91-6, such that the third mounting point 91-7 is at substantially the same height or vertical distance from the central aperture 91-2 as the second aperture 91-6.

As mentioned above, the front suspension system 100 comprises a double wishbone arrangement. As such, each front wheel comprises a lower pair of control arms (or a lower wishbone) 101 and an upper pair of control arms 102.

The lower and upper pairs of control arms 101, 102 are identical and generally form a V-shape. Each pair of control arms 101, 102 is rotatably secured to the hub carrier 91 at its point and is rotatably secured to the chassis 10 of the vehicle 1 at its distal ends. As such, the lower and upper pairs of control arms 101, 102 secure each front wheel to the chassis 10 of the vehicle 1 at four separate positions.

The lower pair of control arms 101 is rotatably connected to the hub carrier 91 at the first mounting point 91-5. The upper pair of control arms 102 is rotatably connected to the hub carrier at the second mounting point 91-6. As such, the lower pair of control arms 101 is connected to the hub carrier 91 directly below the upper pair of control arms 102, and both the lower and upper pairs of control arms 101, 102 are positioned substantially on the vertical centreline E-E of the hub carrier 91.

The front suspension system 100 also comprises a push rod arrangement. As such, each front wheel comprises a push rod 103, a rocker 104 and a combined suspension spring and damper 105.

The push rod 103 is rotatably secured at one end to the lower pair of control arms 101. The push rod 103 is rotatably connected to the lower pair of control arms 101 substantially at their point. In other words, the push rod 103 is rotatably connected to the lower pair of control arms 101 substantially at the location of their rotatable connection to the hub carrier 91, at the first mounting point 91-5. The opposite end of the push rod 103 is rotatably connected to the rocker 104.

The combined suspension spring and damper 105 is rotatably connected at one end to the chassis 10 of the vehicle 1 and is rotatably connected at the opposite end to the rocker 104. The combined suspension spring and dampers 105 of the front right and left wheels FR, FL are rotatably connected to the chassis 10 of the vehicle 1 at a common point 106 on the chassis 10.

The rocker 104 is rotatably connected to an end of the push rod 103 and to an end of the combined suspension spring and damper 105, such that the rocker 104 may move with and transfer forces between the push rod 103 and the combined suspension spring and damper 105. The rocker 104 is also rotatably mounted to the chassis 10 of the vehicle 1.

An actuator in the form of a hydraulic piston 107 is provided between the front right and left wheels FR, FL for adjusting the pre-load applied to the combined suspension spring and dampers 105. As such, one end of the hydraulic piston 107 is rotatably connected to the rocker 104 of the front right wheel FR and the opposite end of the hydraulic piston 107 is rotatably connected to the rocker of the front left wheel FL.

The length of the hydraulic piston 107 is adjustable by a hydraulic servo valve 107-1. Adjusting the length of the hydraulic piston 107 adjusts the pre-load applied to the combined suspension spring and dampers 105 for both the front right and left wheels FR, FL. In other words, adjusting the length of the hydraulic piston 107 adjusts load on the combined suspension spring and dampers 105 of both the front right and left wheels FR, FL. Increasing the length of the hydraulic piston 107 reduces the load on the combined suspension springs and dampers 105, which forces the front right and left wheels FR, FL down relative the chassis 10. Reducing the length of the piston 107 increases the load on the combined springs and dampers 105, which forces the front right and left wheels FR, FL up relative to the chassis 10. As such, adjusting the pre-load on the combined suspension springs and dampers 105 adjusts the ride height of the vehicle 1 at the front end. The hydraulic servo 107-1 is controlled by the VCU.

The combined suspension springs and dampers 106 and the hydraulic piston 107 of the front suspension system 100 are oriented substantially laterally relative to the chassis 10. In other words, the combined suspension springs and dampers 106 and the hydraulic piston 107 are oriented substantially parallel to the drive shafts 90 of the front right and left wheels.

The front suspension system 100 also comprises an anti-roll bar 108 and torsion bars to help reduce body roll in corners. The anti-roll bar 108 is rotatably connected at one end to the rocker 104 of the front right wheel FR and is rotatably connected at the opposite end to the rocker 104 of the front left wheel FL. The anti-roll bar 108 is further rotatably connected at various points to the chassis 10 of the vehicle 1. Each of the front right wheel FR and the front left wheel FL comprises a torsion bar 108 that is rotatably mounted at one end to the hub carrier 91, at the third mounting point 91-7, and is rotatably mounted at the opposite end to the chassis 10 of the vehicle 1. Such anti-roll bars and torsion bars are known in the art and will not be described further here.

The adjustable rear suspension system 110 is shown in Figures 22 and 24. The adjustable rear suspension system 110 generally comprises similar components to the adjustable front suspension system 100, in that the rear suspension system 110 generally comprises a double wishbone arrangement, a pushrod arrangement and torsion bars. However, the components of the rear suspension system 110 are arranged in a different arrangement to the components of the front suspension system 100.

Each of the rear right and rear left wheels comprises a rear hub carrier or knuckle 93, as shown in Figure 24. The hub carrier 93 is arranged adjacent to a wheel hub (not shown) and the drive shaft 90 rotatably extends through a central aperture in the hub carrier 93 and is secured to the wheel hub.

Each rear hub carrier 93 comprises a main body 93-1 having a central aperture 93-2 through which the drive shaft 90 rotatable extends, and a substantially circular cowling 93-3 that is supported on the main body 93-1 and surrounds a brake disc (not shown). In this embodiment, the cowling 93-3 does not form a full circular cover around the entire circumference of the brake disc, but rather has a cut-out portion for accommodating brake pads (not shown) that is positioned towards the rear end of the vehicle 1 when the hub carrier 93 is mounted to the vehicle. A vent 93-4 is provided in the cowling 93-2 to provide cooling for the brake disc. The vent 93-4 is arranged above the horizontal centreline F-F of the hub carrier 93 and is positioned such that the vent 93-4 is towards the front end of the vehicle 1 when the hub carrier 93 is fitted to the vehicle. The vents 93-4 are arranged in a substantially similar position on the rear hub carriers 93 to the third mounting points 91-7 on the front hub carriers 91.

Each rear hub carrier 93 also comprises four mounting points 93-5, 93-6, 93-7, 93-8. A first mounting point 93-5 is arranged directly below the central aperture 93-2, substantially on the vertical centreline G-G of the hub carrier 93, and is positioned at about the midpoint between the central aperture 93-2 and the outer edge of the circle defined by the cowling 93-3. A second mounting point 93-6 is arranged substantially on the horizontal centreline G-G of the hub carrier 93, and is positioned at about the midpoint between the central aperture 93-2 and the outer edge of the circle defined by the cowling 93-3. A third mounting point 91-7 is arranged directly above the central aperture 93-2, substantially on the vertical centreline G-G of the hub carrier 93, and is positioned towards the outer edge of the circle defined by the cowling 93-3. A fourth mounting point 93-8 is arranged substantially on the horizontal centreline F-F of the hub carrier 93, and is positioned at about the midpoint between the central aperture 93-2 and the outer edge of the circle defined by the cowling 93-3.

As mentioned above, the rear suspension system 110 comprises a double wishbone arrangement. As such, each rear wheel comprises a lower pair of control arms (or a lower wishbone) 111 and an upper pair of control arms 112.

The lower and upper pairs of control arms 111, 112 are identical and generally form a V-shape. Each pair of control arms 111, 112 is rotatably secured to the hub carrier 93 at its point and is rotatably secured to the chassis 10 of the vehicle 1 at its distal ends. As such, the lower and upper pairs of control arms 111, 112 secure each rear wheel to the chassis 10 of the vehicle 1 at four separate positions.

The lower pair of control arms 111 is rotatably connected to the hub carrier 93 at the fourth mounting point 93-6. The upper pair of control arms 112 is rotatably connected to the hub carrier at the third mounting point 91-7. As such, the lower and upper pairs of control arms 111, 112 are connected to the rear hub carriers 93 at different locations on the rear hub carriers 93 to the lower and upper pairs of control arms 101, 102 on the front hub carriers 91. In particular, the lower pairs of control arms 91 are rotatably connected to the rear hub carriers 111 at a raised and forward position compared to lower pairs of control arms 101 of the front suspension system.

The different arrangement of the lower pairs of control arms of the front and rear suspension systems 100, 110 arises from the unusually high diffuser 56 at the rear end of the vehicle 1. The lower pairs of control arms 111 of the rear suspension system 110 have been raised compared to the lower pairs of control arms 101 of the front suspension system to prevent the lower control arms 111 from impinging on or extending through the underbody arrangement 50 of the chassis 10 and into the channel 51. This would disrupt the air flowing through the channel 51, reducing the aerodynamic downforce and increasing the drag.

The rear suspension system 110 also comprises a push rod arrangement. As such, each rear wheel comprises a push rod 113, a rocker 114 and a combined suspension spring and damper 115.

The push rod 113 is rotatably secured at one end to the hub carrier 93 at the first mounting point 93-5. The opposite end of the push rod 113 is rotatably connected to the rocker 114.

The combined suspension spring and damper 115 is rotatably connected at one end to the chassis 10 of the vehicle 1 and is rotatably connected at the opposite end to the rocker 114. The combined suspension spring and dampers 115 of the rear right and left wheels RR, RL are rotatably connected to the chassis 10 of the vehicle 1 at different positions on the chassis 10.

The rocker 114 is rotatably connected to an end of the push rod 113 and to an end of the combined suspension spring and damper 115, such that the rocker 114 may move with and transfer forces between the push rod 113 and the combined suspension spring and damper 115. The rocker 114 is also rotatably mounted to the chassis 10 of the vehicle 1.

An actuator in the form of a hydraulic piston 117 is provided between the rear right and left wheels RR, RL for adjusting the pre-load applied to the combined suspension spring and dampers 115. However, in the arrangement of the rear suspension system 110, the hydraulic piston 117 is not directly connected to the rockers 114 of the rear right and left wheels RR, RL. One end of the hydraulic piston 117 is rotatably connected to the chassis 10 of the vehicle 1 and the opposite end of the rocker 117 is rotatably connected to a linkage 119.

The linkage 119 comprises a lever arm 119-1 that is rotatably supported above the chassis 10 of the vehicle 1 on a vertical support member 119-2, which is rotatably mounted to the chassis 10. The hydraulic piston 117 is rotatably connected to the midpoint of the lever arm 119-1. A first transfer member 119-3 is rotatably connected at one end to an end of the lever arm 119-1 and is rotatably connected at the opposite end to the rocker 115 of the rear right wheel RR. A second transfer member 119-3, identical to the first transfer member, is rotatably connected at one end to the other end of the lever arm 119-1 and is rotatably connected at the opposite end to the rocker 115 of the rear left wheel RL. As such, the hydraulic piston 117 is indirectly coupled to the combined suspension springs and dampers 115 of the rear right and left wheels RR, RL.

The length of the hydraulic piston 117 is adjustable by a hydraulic servo valve 117-1. Adjusting the length of the hydraulic piston 117 adjusts the pre-load applied to the combined suspension spring and dampers 115 for both the rear right and left wheels RR, RL. In other words, adjusting the length of the hydraulic piston 117 adjusts load on the combined suspension spring and dampers 115 of both the rear right and left wheels RR, RL. Increasing the length of the hydraulic piston 117 reduces the load on the combined suspension springs and dampers 115, which forces the rear right and left wheels RR, RL down relative the chassis 10. Reducing the length of the piston 117 increases the load on the combined suspension springs and dampers 115, which forces the rear right and left wheels RR, RL up relative to the chassis 10. As such, adjusting the pre-load on the combined suspension springs and dampers 115 adjusts the ride height of the vehicle 1 at the rear end. The hydraulic servo 118 is controlled by the VCU.

The combined suspension springs and dampers 115, the hydraulic piston 117 and the transfer members 119-3 of the rear suspension system 110 are oriented substantially longitudinally relative to the chassis 10. In other words, the combined suspension springs and dampers 115, the hydraulic piston 117 and the transfer members 119-3 of the rear suspension system 110 are oriented substantially perpendicular to the drive shafts 90 of the rear right and left wheels RR, RL.

The different arrangements of the front and rear suspension systems 100, 110 arise from the unusually high diffuser 56 at the rear end of the vehicle 1. If the rear suspension system 110 were to be arranged as the front suspension system 100, the push rods 113 and the lower control arms 111 would imping on or extend through the underbody arrangement 50 of the chassis 10 and into the channel 51. This would disrupt the air flowing through the channel 51, reducing the aerodynamic downforce and increasing the drag.

The rear suspension system 110 also comprises torsion bars 120 rotatably mounted at one end to the rear hub carriers 93, at the second mounting points 93-8, and rotatably mounted at the opposite end to the chassis 10 of the vehicle 1.

Providing a single, controllable hydraulic piston to control both the left and right wheels at the front and rear of the vehicle 1 reduces the mass of the vehicle suspension systems and reduces the complexity of the suspension control systems, compared to systems having one or more adjustable suspension components for each wheel. Such a system enables the ride height of the vehicle to be controlled, but does not enable the roll of the vehicle to be controlled.

Where other suspension systems may be controlled to lower the ride height of the vehicle at speed, in preferred embodiments of the present invention, the front and rear suspension systems 100, 110 of the vehicle 1 are controlled by the VCU to raise the ride height of the vehicle at speed, to compensate for the tyre squish caused by the high aerodynamic downforce generated by the vehicle.

The front and rear suspension systems 100, 110 are configured to accommodate a maximum roll angle of about 2 degrees.

It will be appreciated that in other embodiments the front and rear suspension systems may comprise one or more adjustable components for each wheel and may be configured to control body roll in addition to ride height. It will also be appreciated that the front and rear suspension systems may be configured for any suitable maximum assumed roll angle, depending on the design and performance targets of the vehicle.

### Braking system

The vehicle 1 of the preferred embodiment comprises a known type of braking system comprising disc brakes (not shown) and hydraulically operated brake callipers (not shown) for each wheel. The disc brakes are carbon ceramic disc brakes to provide additional thermal capacity over other types of disc brakes. Additionally, the carbon ceramic brakes may be provided with a series of holes or other surface features to increase the ratio of through area to surface area so as to improve cooling of f the brake discs. Thermal modelling of the brake discs will enable the number and pattern of holes to be created that is appropriate for the specified performance requirements of the vehicle.

### Cooling system

In the vehicle 1 of the preferred embodiment, cooling for the front brakes is provided by air ducts at the front of the vehicle, which channel air around the front brakes when the vehicle is moving. Cooling air passing into the front air ducts is also channelled around the front motor assembly 30 and front controller 35 for the left battery pack 20. The spent, hot, air is vented around the front wheels and/or into the underbody assembly.

Cooling for the rear brakes is provided by air ducts or scoops at the rear of the vehicle, which channel air flowing over the vehicle into the ducts or scoops and around the rear brakes when the vehicle is moving. Cooling air passing into the rear ducts or scoops is also channelled around the rear motor assembly 40 and rear controller 45 for the right battery pack 25. The spent, hot air is vented through further vents in a rear surface of the vehicle.

Preferably, the battery packs 20, 25 are precooled during charging. This may be done using known techniques, such as those used in Formula E racing. The batteries do not then need to be cooled during operation of the vehicle as the mass of the battery packs is such that they do not heat up beyond their maximum operating temperature before they need to be recharged, at which time they may be precooled again and ready for the next operating cycle.

It will be understood that it is, of course, possible to cool the battery packs during operation of the vehicle, whether or not they have also been precooled prior to installation. This may be done by using known techniques such as channelling cooling air or fluid around the battery packs and/or through internal channels. Such techniques will be well-known to the skilled person and will not be further described here.

### Vehicle dimension / performance

The preferred embodiment of the electric vehicle 1 preferably has the following dimensions and operating characteristics:-
- optimised for cornering at between about 200KPH and about 300KPH, preferably about 240 KPH under about lateral 2G and lateral 3G. This may mean that the vehicle exhibits as much downforce during such cornering conditions as it does on a straight;
- downforce produced between about 20kN and 25kN, preferably about 24kN, split about 40% from the front splitter, about 10% from the rear wing and about 50% from the underbody arrangement;
- mass balance: between about 40% and about 50%, preferably 45% at the front and between about 60% and about 50%, preferably about 55% at the rear;
- downforce to drag ratio: between about 4.0 and about 6.0, preferably about 5.0;
- floor 'channel' having a width of between about 1000mm and about 1500mm, preferably about 1300mm wide; and having a height at the front end of between about 100mm and about 250mm, preferably about 200mm above the ground; and having a height at the rear end of between about 350mm and about 450mm, preferably about 390mm;
- mass flow of air through the cabin: between 1 kg/s and about 2 kg/s, preferably about 1.3kg/s (through a nose intake of between about 20,000mm2 and about 30,000mm2, preferably about 25,000mm2);
- mass flow through the front radiator (per side): between 1 kg/s and about 2 kg/s , preferably about 1.2kg/s (through a front corner intake of between about 40,000mm2 and about 50,000mm2, preferably about 42,000mm2);
- mass flow through the rear radiator (per side): between 1 kg/s and about 2 kg/s, preferably about 1.5kg/s (through a rear intake of between about 50,000mm2 and about 60,000mm2, preferably about 55,000mm2);
- mass flow over the front brakes (per side): between 0.1 kg/s and about 1 kg/s, preferably about 0.5kg/s (through a front corner intake of between about 20,000mm2 and about 30,000mm2, preferably about 22,000mm2);
- mass flow over the rear brakes (per side): between 0.1 kg/s and about 1 kg/s, preferably about 0.3kg/s (through a rear intake of between about 10,000mm2 and about 20,000mm2, preferably about 15,000mm2);
- drag reduction using DRS: between about 10% and about 30%, preferably about 20%;
- drag reduction using fully stowed positon of the rear wing: between about 40% and about 50%, preferably about 45%;
- front flap adjustment range: between about 10 and about 20 degrees, preferably about 12 degrees, preferably in increments of about 0.5 or about 1 or about 1.5 or about 2 degrees; and
- aerodynamic balance shift resulting from front flap adjustment: between about 1% and about 10%, preferably about 4% per about 1 or about 2 degrees of flap adjustment.

## Claims

1. An electric vehicle (1) comprising:
first front (FL) and rear wheels (RL) at a first side of the vehicle;
second front (FR) and rear wheels (RR) at a second side of the vehicle, opposite the first side; and
a chassis (10) defining a cockpit (15);
wherein the cockpit (15) has a cockpit floor (15-1), a cockpit roof (15-2) and first (15-3) and second cockpit sidewalls (15-4) extending between the cockpit floor (15-1) and the cockpit roof (15-2),
**characterised in that** the vehicle comprises:
a first battery pack receiving portion (18) adjacent at least a portion of the first cockpit sidewall and between the first front (FL) and rear wheels (RL);
a second battery pack receiving portion (19) adjacent at least a portion of the second cockpit sidewall and between the second front (FR) and rear wheels (RR);
a first battery pack (20) releasably secured to the first battery pack receiving portion (18) by a first battery pack securing means;
a second battery pack (25) releasably secured to the second battery pack receiving portion (19) by a second battery pack securing means;
wherein the first (20) and second battery packs (25) are releasably secured to the respective first and second battery receiving portions so to at least partially overlap in a vertical direction with the respective first (15-3) and second cockpit sidewalls (15-4); and
wherein the first (20) and second battery packs (25) are positioned on the sides of the vehicle (1) adjacent at least a portion of at least a first side and a second side of the cockpit (15).

2. An electric vehicle (1) according to Claim 1, further comprising:
a front electric motor assembly (30) configured to drive the first front wheel (FL) and the second front wheel (FR) and positioned forward of the cockpit (15);
a rear electric motor assembly (40) configured to drive the first rear wheel (RL) and the second rear wheel (RR) and positioned rearward of the cockpit (15).

3. An electric vehicle (1) according to Claim 2, wherein:
the first battery pack (20) is coupled to the front electric motor assembly (30) so as to supply power only to the front electric motor assembly (30); and
the second battery pack (25) is coupled to the rear electric motor assembly (40) so as to supply power only to the rear electric motor assembly (40).

4. An electric vehicle (1) according to any of Claims 2 to 3, wherein the first battery pack is removable laterally from the first battery receiving portion and the second battery pack is removable laterally from the second battery receiving portion.

5. An electric vehicle (1) according to any of Claims 2 to 4, wherein the first battery pack (20) is releasably securable to the chassis (10) so as to extend substantially between first front (12) and rear wheel housings (14) for the first front (FL) and rear wheels (RL) and the second battery pack (25) is releasably securable to the chassis (10) so as to extend substantially between second front and rear wheel housings for the second front (FR) and rear wheels (RR).

6. An electric vehicle (1) according to any of Claims 2 to 5, wherein each of the front (30) and rear electric motor assemblies (40) comprises a pair of electric motors, a first one of the electric motors being arranged to drive a first wheel at the first side of the vehicle (FL) and a second one of the electric motors being arranged to drive a second wheel at the second side of the vehicle (FR).

7. An electric vehicle (1) according to any of Claims 2 to 6, further comprising an aerodynamic underbody arrangement (50) configured to expand air and generate downforce, the underbody arrangement comprising a continuous channel (51) for air to pass beneath the vehicle, the continuous channel for air comprising:
an expansion section extending from a front end of the underbody arrangement to a rear end of the underbody arrangement; and
a pair of opposing sidewalls (53) defining opposite sides of the central expansion section;
wherein the sidewalls separate the central expansion section from the first and second battery pack receiving portions; and
wherein the sidewalls are configured to restrict the flow of air into and out of the expansion section beneath the first and second battery pack receiving portions.

8. An electric vehicle (1) according to Claim 7, wherein the underbody arrangement (50) is configured so that when the vehicle is at rest on a level surface, a height of a rear end of the expansion section from the level surface is greater than a height of a front end of the expansion section from the level surface.

9. An electric vehicle (1) according to Claim 7 or 8, wherein a rear portion of the expansion section comprises a diffuser (56) and wherein the diffuser comprises two divider (57) so as to divide the rear portion of the expansion section into three sub-channels.

10. An electric vehicle (1) according to any of the preceding Claims, further comprising:
A position adjustable and pitch adjustable rear wing (70);
a linkage for adjusting the position and pitch of the rear wing; and
an actuator (86) coupled to the linkage so as to move the linkage and thereby vary the position and pitch of the wing;
wherein the hydraulic actuator is positioned substantially on a longitudinal centreline of the vehicle.

11. An electric vehicle according to Claim 10 when dependent on Claim 9, wherein the actuator (86) is configured to move the linkage so as to extend the wing to a position in which air expanded through the diffuser section arrangement is directed onto the wing.

12. An electric vehicle according to any of Claims 7 to 11, wherein the underbody arrangement (50) further comprises an adjustable front wing (55) proximate a front end of the expansion section configured to generate downforce, wherein the pitch of the front wing is adjustable.

## Patentansprüche

1. Elektrofahrzeug (1), aufweisend:
ein erstes Vorder- (FL) und Hinterrad (RL) an einer ersten Seite des Fahrzeugs;
ein zweites Vorder- (FR) und Hinterrad (RR) an einer der ersten Seite entgegengesetzten zweiten Seite des Fahrzeugs, und
ein Chassis (10), das ein Cockpit (15) definiert;
wobei das Cockpit (15) einen Cockpitboden (15-1), ein Cockpitdach (15-2) und eine erste (15-3) und zweite Cockpitseitenwand (15-4), die sich zwischen dem Cockpitboden (15-1) und dem Cockpitdach (15-2) erstrecken, aufweist,
**dadurch gekennzeichnet, dass** das Fahrzeug aufweist:
einen ersten Akkupackaufnahmeabschnitt (18), der mindestens einem Abschnitt der ersten Cockpitseitenwand benachbart und zwischen dem ersten Vorder- (FL) und Hinterrad (RL) angeordnet ist;
einen zweiten Akkupackaufnahmeabschnitt (19), der mindestens einem Abschnitt der zweiten Cockpitseitenwand benachbart und zwischen dem zweiten Vorder- (FR) und Hinterrad (RR) angeordnet ist;
einen ersten Akkupack (20), der durch eine erste Akkupackbefestigungseinrichtung lösbar an dem ersten Akkupackaufnahmeabschnitt (18) befestigt ist;
einen zweiten Akkupack (25), der durch eine zweite Akkupackbefestigungseinrichtung lösbar an dem zweiten Akkupackaufnahmeabschnitt (19) befestigt ist;
wobei der erste (20) und zweite Akkupack (25) an dem ersten bzw. zweiten Akkupackaufnahmeabschnitt lösbar befestigt sind, um in einer vertikalen Richtung die jeweilige erste (15-3) und zweite Cockpitseitenwand (15-4) zumindest teilweise zu überlagern; und
wobei der erste (20) und zweite Akkupack (25) an den Seiten des Fahrzeugs (1) zumindest einem Abschnitt mindestens einer ersten Seite und einer zweiten Seite des Cockpits (15) benachbart angeordnet sind.

2. Elektrofahrzeug (1) nach Anspruch 1, ferner aufweisend:
eine vordere Elektromotorbaugruppe (30), die dazu eingerichtet ist, das erste Vorderrad (FL) und das zweite Vorderrad (FR) anzutreiben, und vor dem Cockpit (15) angeordnet ist;
eine hintere Elektromotorbaugruppe (40), die dazu eingerichtet ist, das erste Hinterrad (RL) und das zweite Hinterrad (RR) anzutreiben, und hinter dem Cockpit (15) angeordnet ist.

3. Elektrofahrzeug (1) nach Anspruch 2, wobei:
der erste Akkupack (20) mit der vorderen Elektromotorbaugruppe (30) gekoppelt ist, um nur die vordere Elektromotorbaugruppe (30) mit Strom zu versorgen; und
der zweite Akkupack (25) mit der hinteren Elektromotorbaugruppe (40) gekoppelt ist, um nur die hintere Elektromotorbaugruppe (40) mit Strom zu versorgen.

4. Elektrofahrzeug (1) nach einem der Ansprüche 2 bis 3, wobei der erste Akkupack aus dem ersten Akkupackaufnahmeabschnitt seitlich entfernbar ist und der zweite Akkupack aus dem zweiten Akkupackaufnahmeabschnitt seitlich entfernbar ist.

5. Elektrofahrzeug (1) nach einem der Ansprüche 2 bis 4, wobei der erste Akkupack (20) lösbar am Chassis (10) befestigbar ist, um sich im Wesentlichen zwischen dem ersten Vorder- (12) und Hinterradgehäuse (14) für das erste Vorder- (FL) und Hinterrad (RL) zu erstrecken, und der zweite Akkupack (25) lösbar am Chassis (10) befestigbar ist, um sich im Wesentlichen zwischen dem zweiten Vorder- und Hinterradgehäuse für das zweite Vorder- (FR) und Hinterrad (RR) zu erstrecken.

6. Elektrofahrzeug (1) nach einem der Ansprüche 2 bis 5, wobei jede der vorderen (30) und hinteren Elektromotorbaugruppen (40) ein Paar Elektromotoren aufweist, wobei ein erster der Elektromotoren dazu angeordnet ist, ein erstes Rad auf der ersten Seite des Fahrzeugs (FL) anzutreiben, und ein zweiter der Elektromotoren dazu angeordnet ist, ein zweites Rad auf der zweiten Seite des Fahrzeugs (FR) anzutreiben.

7. Elektrofahrzeug (1) nach einem der Ansprüche 2 bis 6, ferner aufweisend eine aerodynamische Unterbodenanordnung (50), die dazu eingerichtet ist, Luft zu expandieren und einen Abtrieb zu erzeugen, wobei die Unterbodenanordnung einen durchgehenden Kanal (51) aufweist, um Luft unter dem Fahrzeug entlang zu leiten, wobei der durchgehende Luftkanal aufweist:
einen Expansionsabschnitt, der sich von einem vorderen Ende der Unterbodenanordnung zu einem hinteren Ende der Unterbodenanordnung erstreckt; und
ein Paar einander entgegengesetzter Seitenwände (53), die entgegengesetzte Seiten des mittigen Expansionsabschnitts definieren;
wobei die Seitenwände den mittigen Expansionsabschnitt vom ersten und zweiten Akkupackaufnahmeabschnitt trennen und
wobei die Seitenwände dazu eingerichtet sind, die Luftströmung in den und aus dem Expansionsabschnitt unter den ersten und zweiten Akkupackaufnahmeabschnitt einzuschränken.

8. Elektrofahrzeug (1) nach Anspruch 7, wobei die Unterbodenanordnung (50) derart eingerichtet ist, dass, wenn das Fahrzeug auf einer planen Oberfläche ruht, die Höhe des hinteren Endes des Expansionsabschnitts von der planen Fläche größer ist als die Höhe des vorderen Endes des Expansionsabschnitts von der planen Fläche.

9. Elektrofahrzeug (1) nach Anspruch 7 oder 8, wobei ein hinterer Abschnitt des Expansionsabschnitts einen Diffusor (56) aufweist und wobei der Diffusor zwei Teiler (57) aufweist, um den hinteren Abschnitt des Expansionsabschnitts in drei Unterkanäle zu teilen.

10. Elektrofahrzeug (1) nach einem der vorstehenden Ansprüche, ferner aufweisend:
einen positions- und neigungseinstellbaren Heckkotflügel (70) ;
ein Gestänge zum Einstellen der Position und Neigung des Heckkotflügels und
ein Stellglied (86), das mit dem Gestänge gekoppelt ist, um das Gestänge zu bewegen und dadurch die Position und Neigung des Heckkotflügels zu variieren;
wobei das Hydraulikstellglied im Wesentlichen auf einer Längsmittellinie des Fahrzeugs angeordnet ist.

11. Elektrofahrzeug nach Anspruch 10, wenn abhängig von Anspruch 9, wobei das Stellglied (86) dazu eingerichtet ist, das Gestänge zu bewegen, um den Kotflügel in eine Position auszufahren, in der durch die Diffusorabschnittsanordnung ausgedehnte Luft auf den Kotflügel geleitet wird.

12. Elektrofahrzeug nach einem der Ansprüche 7 bis 11, wobei die Unterbodenanordnung (50) ferner einen einstellbaren Vorderkotflügel (55) in der Nähe eines vorderen Endes des Expansionsabschnitts aufweist, der dazu eingerichtet ist, einen Abtrieb zu erzeugen, wobei die Neigung des Vorderkotflügels einstellbar ist.

## Revendications

1. Véhicule électrique (1) comprenant :
des premières roues avant (FL) et arrière (RL) sur un premier côté du véhicule ;
des secondes roues avant (FR) et arrière (RR) sur un second côté du véhicule, à l'opposé du premier côté ; et
un châssis (10) définissant un habitacle (15) ;
l'habitacle (15) comportant un plancher d'habitacle (15-1), un toit d'habitacle (15-2) et des première (15-3) et seconde (15-4) parois latérales d'habitacle s'étendant entre le plancher d'habitacle (15-1) et le toit d'habitacle (15-2),
**caractérisé en ce que** le véhicule comprend :
une première partie de réception de bloc-batterie (18) adjacente à au moins une partie de la première paroi latérale d'habitacle et entre les premières roues avant (FL) et arrière (RL) ;
une seconde partie de réception de bloc-batterie (19) adjacente à au moins une partie de la seconde paroi latérale d'habitacle et entre les secondes roues avant (FR) et arrière (RR) ;
un premier bloc-batterie (20) fixé de manière libérable à la première partie de réception de bloc-batterie (18) par un premier moyen de fixation de bloc-batterie ;
un second bloc-batterie (25) fixé de manière libérable à la seconde partie de réception de bloc-batterie (19) par un second moyen de fixation de bloc-batterie ;
les premier (20) et second (25) blocs-batteries étant fixés de manière libérable aux première et seconde parties de réception de batterie respectives de façon à être au moins partiellement superposés, dans la direction verticale, aux première (15-3) et seconde (15-4) parois latérales d'habitacle respectives ; et
les premier (20) et second (25) blocs-batteries étant placés sur les côtés du véhicule (1) de manière adjacente à au moins une partie d'au moins un premier côté et un second côté de l'habitacle (15).

2. Véhicule électrique (1) selon la revendication 1, comprenant, en outre :
un ensemble moteur électrique avant (30) conçu pour entraîner la première roue avant (FL) et la seconde roue avant (FR) et placé en avant de l'habitacle (15) ;
un ensemble moteur électrique arrière (40) conçu pour entraîner la première roue arrière (RL) et la seconde roue arrière (RR) et placé en arrière de l'habitacle (15).

3. Véhicule électrique (1) selon la revendication 2, dans lequel :
le premier bloc-batterie (20) est accouplé à l'ensemble moteur électrique avant (30) de façon à fournir de l'énergie uniquement à l'ensemble moteur électrique avant (30) ; et
le second bloc-batterie (25) est accouplé à l'ensemble moteur électrique arrière (40) de façon à fournir de l'énergie uniquement à l'ensemble moteur électrique arrière (40) .

4. Véhicule électrique (1) selon l'une ou l'autre des revendications 2 et 3, dans lequel le premier bloc-batterie peut être extrait latéralement de la première partie de réception de batterie et le second bloc-batterie peut être extrait latéralement de la seconde partie de réception de batterie.

5. Véhicule électrique (1) selon l'une quelconque des revendications 2 à 4, dans lequel le premier bloc-batterie (20) peut être fixé de manière libérable au châssis (10) de façon à s'étendre sensiblement entre des premiers passages de roues avant (12) et arrière (14) pour les premières roues avant (FL) et arrière (RL) et le second bloc-batterie (25) peut être fixé de manière libérable au châssis (10) de façon à s'étendre sensiblement entre des seconds passages de roues avant et arrière pour les secondes roues avant (FR) et arrière (RR) .

6. Véhicule électrique (1) selon l'une quelconque des revendications 2 à 5, dans lequel chacun des ensembles moteurs électriques avant (30) et arrière (40) comprend une paire de moteurs électriques, un premier des moteurs électriques étant destiné à entraîner une première roue sur le premier côté du véhicule (FL) et un second des moteurs électriques étant destiné à entraîner une seconde roue sur le second côté du véhicule (FR).

7. Véhicule électrique (1) selon l'une quelconque des revendications 2 à 6, comprenant, en outre, un système de soubassement aérodynamique (50) conçu pour détendre l'air et générer une déportance, le système de soubassement comprenant un canal continu (51) pour le passage d'air sous le véhicule, le canal continu à air comprenant :
une section de détente s'étendant d'une extrémité avant du système de soubassement à une extrémité arrière du système de soubassement ; et
une paire de parois latérales opposées (53) définissant des côtés opposés de la section de détente centrale ;
dans lequel les parois latérales séparent la section de détente centrale des première et seconde parties de réception de bloc-batterie ; et
dans lequel les parois latérales sont conçues pour restreindre l'écoulement d'air dans et hors de la section de détente sous les première et seconde parties de réception de bloc-batterie.

8. Véhicule électrique (1) selon la revendication 7, dans lequel le système de soubassement (50) est conçu de telle sorte que, lorsque le véhicule est au repos sur une surface plane, une hauteur d'une extrémité arrière de la section de détente relativement à la surface plane est supérieure à une hauteur d'une extrémité avant de la section de détente relativement à la surface plane.

9. Véhicule électrique (1) selon la revendication 7 ou 8, dans lequel une partie arrière de la section de détente comprend un diffuseur (56) et dans lequel le diffuseur comprend deux séparateurs (57) afin de diviser la partie arrière de la section de détente en trois sous-canaux.

10. Véhicule électrique (1) selon l'une quelconque des revendications précédentes, comprenant, en outre :
un aileron arrière (70) à position et inclinaison réglables ;
une tringlerie pour régler la position et l'inclinaison de l'aileron arrière ; et
un actionneur (86) accouplé à la tringlerie pour déplacer la tringlerie et varier ainsi la position et l'inclinaison de l'aileron ;
dans lequel l'actionneur hydraulique est placé sensiblement sur une ligne médiane longitudinale du véhicule.

11. Véhicule électrique selon la revendication 10 lorsqu'elle dépend de la revendication 9, dans lequel l'actionneur (86) est conçu pour déplacer la tringlerie de façon à déployer l'aileron jusqu'à une position dans laquelle l'air détendu à travers le système de section de diffuseur est dirigé sur l'aileron.

12. Véhicule électrique selon l'une quelconque des revendications 7 à 11, dans lequel le système de soubassement (50) comprend, en outre, un aileron avant (55) réglable à proximité d'une extrémité avant de la section de détente conçu pour générer une déportance, dans lequel l'inclinaison de l'aileron avant est réglable.
